# EUROPEAN PATENT APPLICATION

(11) **EP 1 939 470 A1**
(43) Date of publication of application: **02.07.2008**
(21) Application number: 06811679.7
(22) Date of filing: 12.10.2006
(51) Int. Cl.: F16C 11/10, F16C 11/04, H04M 1/02, H05K 5/03

(54) **CONNECTION MECHANISM AND MOBILE TERMINAL**

(30) Priority: 12.10.2005 JP 2005298114
(71) Applicant: OMRON CORPORATION, Kyoto-shi, Kyoto 600-8530 (JP)
(72) Inventor: TAKAMORI, Satoshi, Kyoto-shi, Kyoto 600-8530 (JP); NISHIDA, Masami, Osaka-shi, Osaka 532-0031 (JP)
(74) Representative: Brykman, Georges
(86) International application number: PCT/JP2006/320383
(87) International publication number: WO 2007/043612

(57) **Abstract**

To provide a connection mechanism opening and closing casings by a novel structure and a mobile terminal using the connection mechanism. In particular, disclosed is a connection mechanism which connects a first casing and a second casing so that they can be moved between a closed state in which they are superposed on each other and an open state in which they are open and spread out. The connection mechanism comprises opening parts formed on the connection side of the first casing and the connection side of the second casing, connection members of which both ends can be advanced into and retreated from the opening parts of the first casing and the opening parts of the second casing, and an advance/retreat ratio stabilization part for stabilizing the advance/retreat amounts of the connection members so that the ratio of the advance/retreat amount of the connection member into/from the first casing to the advance/retreat amount of the connection member into/from the second casing becomes a predetermined value.

## Description

### TECHNICAL FIELD

The present invention relates to a connection mechanism used in mobile telephones and mobile terminals such as PDA in which two casings are connected so as to be opened and spread out or closed, and a mobile terminal.

### BACKGROUND ART

Conventionally, mobile telephones and various mobile terminals such as PDA and a laptop have been proposed. A so-called clam-shell type in which a lid with a display unit and a body with key operation unit are connected so as to be spread out and folded is proposed for such mobile terminals.

A connection part of such clam-shell type partially overlaps the lid and the body so that the lid and the body are superimposed in a folded state, and a uniaxial hinge is arranged at the overlapping site.

Various hinge structures have been proposed in recent years, and an open/close device of an equipment case with a biaxial hinge structure is also proposed (see Patent Document 1).
The open/close device enables the turning order of a first case and a second case connected to each axis of the hinge to always be constant.

However, the operation is awkward since the turning of the first case and the second case is performed separately and in order in the open/close device. In the relationship between a connection member and the first case (second case), two substantially rectangular solids merely turn with the axis as the center, and the structure is not as novel.

Patent Document 1: Japanese Laid-Open Patent Publication No. 2004-308710

### DISCLOSURE OF THE INVENTION

### PROBLEMS TO BE SOLVED BY THE INVENTION

In view of the above problems, the present invention aims to provide a connection mechanism that opens and closes with a novel structure, and a mobile terminal using the connection mechanism.

### MEANS FOR SOLVING THE PROBLEMS

The present invention relates to a connection mechanism which connects a first casing and a second casing so as to move between a closed state in which the casings are superimposed on each other and an open state in which the casings are open and spread out; the connection mechanism including opening parts formed on a connection side of the first casing and a connection side of the second casing; connection members of which both ends can be advanced into and retreated from the opening parts of the first casing and the opening parts of the second casing; and an advance/retreat ratio stabilization part for stabilizing a ratio of an advance/retreat amount of the connection member into/from the first casing to an advance/retreat amount of the connection member into/from the second casing to a predetermined value.

Therefore, a connection mechanism that opens and closes with a novel structure, and in which the ratio of the advance/retreat amount of the connection member into/from the first casing and the advance/retreat amount of the connection member into/from the second casing in opening/closing stabilizes is provided.

In one aspect of the present invention, the advance/retreat ratio stabilization part is formed by a first casing side arm connected to the first casing, a second casing side arm connected to the second casing, and a pivot attachment part for pivotally attaching the first casing side arm and the second casing side arm and connecting to the connection member; a first casing side connection for connecting the first casing side arm to the first casing, a second casing side connection for connecting the second casing side arm to the second casing, and a connection member side connection for connecting the pivot attachment part to the connection member are arranged; and in the connection methods, one of the casing side connection or the connection member side connection is a pivot attachment allowing pivotal movement, and the other is a movable support movable in a constant direction.
Thus, the operation in opening/closing of the first casing, the second casing, and the connection member is reliably regulated and stabilized.

In another aspect of the present invention, the movable support is a slidable support allowing slide movement; and the first casing side arm and the second casing side arm have surfaces on the side the first casing side arm and the second casing side arm face each other curved or bent formed to a concave form when the first casing and the second casing are in the closed state. Thus, a fully closed state in which the first casing and the second casing are folded and completely superimposed is realized without the first casing side arm and the second casing side arm inhibiting the transition of the first casing and the second casing towards the completely closed state.

In another further aspect of the present invention, first casing side arms, one of which being pivotally attached to the first casing; and second casing side arms, one of which being pivotally attached to the second casing are arranged; wherein a plurality of supporting parts for supporting the other first casing side arm and the other second casing side arm to be movable while drawing a circular arc are arranged on the connection member.
Thus, the operation in opening/closing of the first casing, the second casing, and the connection member is reliably regulated and stabilized.

Moreover, in the present invention, the supporting part is formed with a peripheral surface gear in which teeth are arranged on an inner side of the circular arc; a rolling gear which rolls on the peripheral surface gear is arranged on the other first casing side arm and the other second casing side arm; a center gear allowing rotation about a center axis of each peripheral surface gear while gearing with the rolling gear is arranged in correspondence to each peripheral surface gear; and the center gear gearing with the rolling gear of the first casing side arm and the center gear gearing with the rolling gear of the second casing side arm are connected to rotate in opposite directions to each other.
Thus, the operation in opening/closing of the first casing, the second casing, and the connection member is reliably regulated and stabilized.

The present invention also relates to a connection mechanism which connects a first casing and a second casing so as to move between a closed state in which the casings are superimposed on each other and an open state in which the casings are open and spread out; the connection mechanism including opening parts formed on a connection side of the first casing and a connection side of the second casing; and connection members of which both ends can be advanced into and retreated from the opening parts of the first casing and the opening parts of the second casing; wherein the connection member is axially supported by the first casing at a turning shaft on the first casing side and is axially supported by the second casing at a turning shaft on the second casing side.
Thus, the first casing, the second casing, and the connection member are connected by the turning shafts, and a stable opening/closing operation is realized with a novel structure.

The present invention also relates to a mobile terminal equipped with the connection mechanism.
The mobile terminal includes mobile electronic equipment such as a mobile telephone, PDA, a laptop, a digital camera, a digital video camera, mobile navigation equipment, a mobile DVD player, and a mobile music player.
A mobile terminal that opens and closes with a novel structure is thereby provided.

### EFFECT OF THE INVENTION

According to the present invention, a connection mechanism that opens and closes with a novel structure, and a mobile terminal using the connection mechanism are provided.

### BRIEF DESCRIPTION OF THE DRAWINGS

Fig. 1 is a perspective view of a mobile telephone in a closed state.
Fig. 2 is a perspective view of the mobile telephone in an open state.
Fig. 3 is a perspective view of the mobile telephone with a cover partially detached.
Fig. 4 is an exploded perspective view of a connection unit seen from diagonally above.
Fig. 5 is an exploded perspective view of the connection unit seen from diagonally below.
Figs. 6A to 6C are partially enlarged explanatory views.
Fig. 7 is a perspective view of one part of the connection unit in the open state.
Fig. 8 is a perspective view of one part of the connection unit slightly changed towards the closing direction from the open state.
Fig. 9 is a perspective view of one part of the connection unit changed towards the closing direction.
Fig. 10 is a perspective view of one part of the connection unit in the closed state.
Fig. 11 is an enlarged cross sectional view of the connection unit portion in the open state.
Fig. 12 is an enlarged cross sectional view of the connection unit portion slightly changed towards the closing direction from the open state.
Fig. 13 is an enlarged cross sectional view of the connection unit portion further changed towards the closing direction.
Fig. 14 is an enlarged cross sectional view of the connection unit portion in the closed state.
Figs. 15A to 15D are explanatory views describing a mobile telephone in each state changing from the open state to the closed state in a perspective view.
Fig. 16 is a perspective view of a mobile telephone of Embodiment 2.
Fig. 17 is a partially exploded enlarged perspective view of the mobile telephone of Embodiment 2.
Fig. 18 is a plan view of a mobile telephone of Embodiment 3.
Fig. 19 is an exploded perspective view of a connection unit of Embodiment 3.
Fig. 20 is an exploded perspective view of the connection unit of Embodiment 3.
Fig. 21 is an explanatory view in which a link unit is partially enlarged of Embodiment 3.
Fig. 22 is a perspective view of a connection body of Embodiment 3.
Fig. 23 is a bottom view of one part of the connection unit of Embodiment 3.
Fig. 24 is a bottom view of one part of the connection unit of Embodiment 3.
Fig. 25 is a bottom view of one part of the connection unit of example 3.
Fig. 26 is an enlarged cross sectional view of the connection unit portion of Embodiment 3.
Fig. 27 is an enlarged cross sectional view of the connection unit portion of Embodiment 3.
Fig. 28 is an enlarged cross sectional view of the connection unit portion of Embodiment 3.
Fig. 29 is an enlarged perspective view of a locking guide body of Embodiment 3.
Fig. 30 is a plan view of a mobile telephone of Embodiment 4.
Fig. 31 is an explanatory view of the mobile telephone of Embodiment 4.
Fig. 32 is an exploded perspective view of a connection unit of Embodiment 4.
Fig. 33 is an exploded perspective view of the connection unit of Embodiment 4.
Fig. 34 is an exploded perspective view of the connection unit of Embodiment 4.
Fig. 35 is an exploded perspective view of the connection unit of Embodiment 4.
Fig. 36 is a perspective view of one part of the connection unit of Embodiment 4.
Fig. 37 is a perspective view of one part of the connection unit of Embodiment 4.
Fig. 38 is a perspective view of one part of the connection unit of Embodiment 4.
Fig. 39 is a perspective view of a link unit and a pushing unit of Embodiment 4.
Fig. 40 is a perspective view of the link unit and the pushing unit of Embodiment 4.
Fig. 41 is a perspective view of the link unit and the pushing unit of Embodiment 4.
Fig. 42 is a perspective view of the link unit and the pushing unit of Embodiment 4.
Figs. 43C to 43E are explanatory views of the connection unit portion of Embodiment 4 in an enlarged cross section.
Figs. 44C to 44E are explanatory views of the connection unit portion of Embodiment 4 in an enlarged cross section.
Figs. 45C to 45E are explanatory views of the connection unit portion of Embodiment 4 in an enlarged cross section.
Figs. 46C to 46E are explanatory views of the connection unit portion of Embodiment 4 in an enlarged cross section.
Fig. 47 is a plan view of a mobile telephone of Embodiment 5.
Figs. 48A and 48B are explanatory views of the mobile telephone of Embodiment 5.
Fig. 49 is an exploded perspective view of a connection unit of Embodiment 5.
Fig. 50 is an exploded perspective view of the connection unit of Embodiment 5.
Fig. 51 is a perspective view of a connection body of Embodiment 5.
Fig. 52 is a perspective view of one part of the connection unit of Embodiment 5.
Fig. 53 is a perspective view of one part of the connection unit of Embodiment 5.
Fig. 54 is a perspective view of one part of the connection unit of Embodiment 5.
Fig. 55 is a perspective view of one part of the connection unit of Embodiment 5.
Fig. 56 is a perspective view of a link unit and an angle fixing unit of Embodiment 5.
Fig. 57 is a perspective view of the link unit and the angle fixing unit of Embodiment 5.
Fig. 58 is a perspective view of the link unit and the angle fixing unit of Embodiment 5.
Fig. 59 is a perspective view of the link unit and the angle fixing unit of Embodiment 5.
Figs. 60G and 60H are explanatory views of the connection unit portion of Embodiment 5 in an enlarged cross section.
Figs. 61G and 61H are explanatory views of the connection unit portion of Embodiment 5 in an enlarged cross section.
Figs. 62G and 62H are explanatory views of the connection unit portion of Embodiment 5 in an enlarged cross section.
Figs. 63G and 63H are explanatory views of the connection unit portion of Embodiment 5 in an enlarged cross section.
Fig. 64 is a perspective view of one part of a connection unit of Embodiment 6.
Fig. 65 is a perspective view of a link unit and a pushing unit 550 of Embodiment 6.

### DESCRIPTION OF THE REFERENCE NUMERALS

1, 121, 201, 301, 401: Mobile Telephone
3, 303, 403: LID
5, 205, 305, 405: Connection Unit
7, 307, 407: Body
20, 220, 320, 420, 520: Connection Body
30, 230: Guide
62a, 62b: Concave Part
77, 398, 498: Link Pivot Attachment Part
98, 277, 298, 377, 477: Guide Plate
100, 210, 310, 410: Link Unit
102, 106, 211, 378, 399, 478, 499: Pivot Attachment Projection
103, 243, 312b, 412b: Body Side Arm
105, 251: Slide Body
107, 212, 312a, 412a: Lid Side Arm
109: Shaft Member
133a, 133b: Turning Shaft
227, 422d: Shaft
317a: Rolling Gear
322a: Center Gear
331 a, 331 b, 431 a, 431 b: Peripheral Surface Gear
La, Lb: Advance/Retreat Distance

### BEST MODE FOR CARRYING OUT THE INVENTION

An embodiment of the present invention will be described below with reference to the drawings.

### Embodiment 1

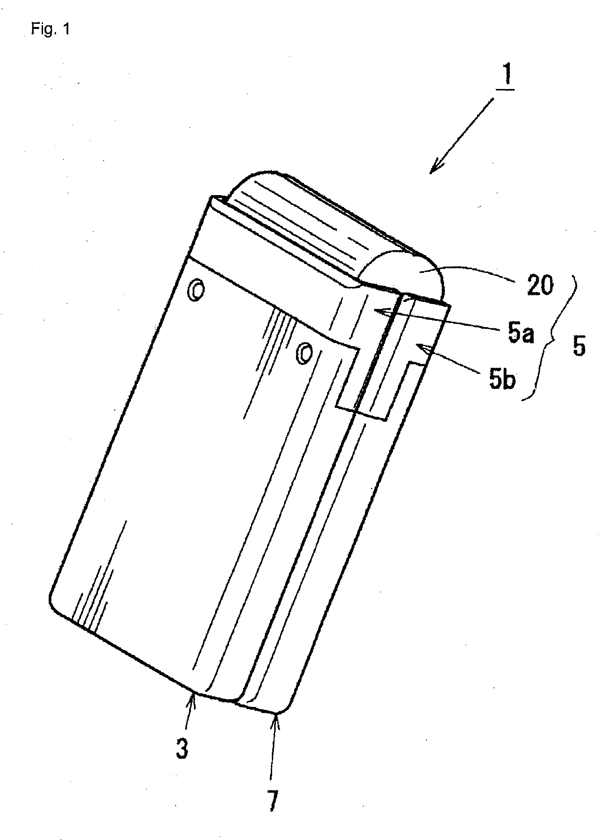

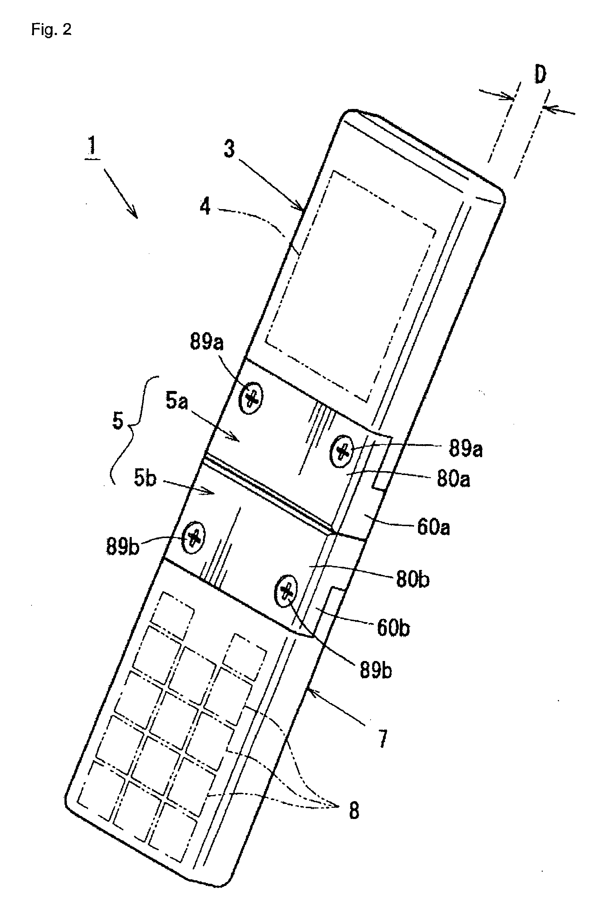

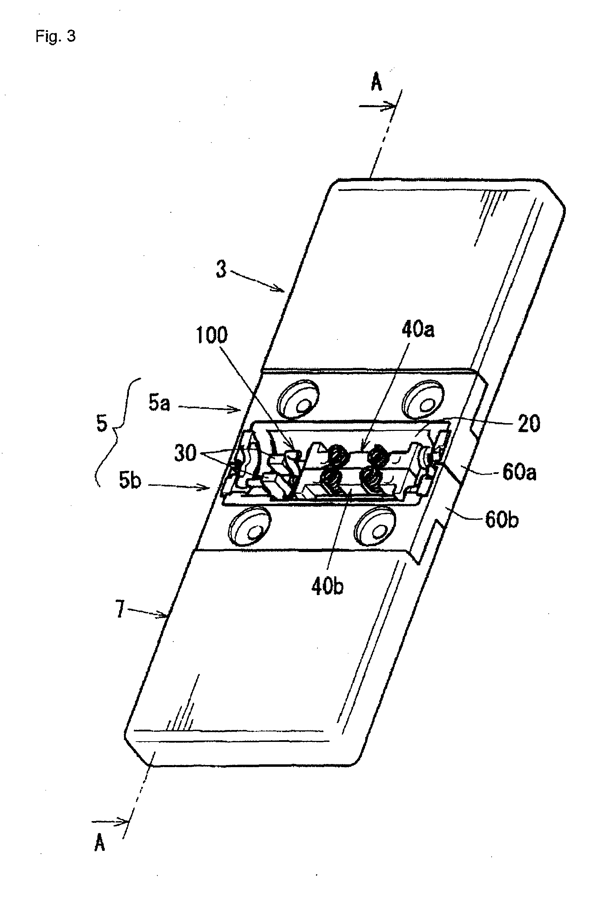

First, a configuration of a mobile telephone 1 of Embodiment 1 will be described with a perspective view of a closed state shown in Fig. 1, a perspective view of an open state shown in Fig. 2, and a perspective view of a state in which a cover is partially detached shown in Fig. 3.

The mobile telephone 1 is configured by a lid 3, a body 7, and a connection unit 5 for connecting the same. The connection unit 5 is configured by a lid side unit 5a, a body side unit 5b, a connection body 20, and a link unit 100.
The lid side unit 5a and the body side unit 5b are screw fixed to the lid 3 and the body 7, and integrated with the lid 3 and the body 7. In this embodiment, the units are screw fixed with screws 89a, 89b, but may be fixed through fit-in or adhesion.

As shown with a virtual line in Fig. 2, a liquid crystal display 4 serving as a display unit is arranged on the open/close inner surface of the lid 3.
As shown with a virtual line, a plurality of input buttons 8 serving as operation input unit is arranged on the open/close inner surface of the body 7.

When the mobile telephone 1 is in the open state, the connection body 20 is completely housed in an opening part (concave part formed in a lid side guide body 60a) of the lid side unit 5a and an opening part (concave part formed in a body side guide body 60b) of the body side unit 5b, as shown in Fig. 3. A lid side pushing unit 40a, a body side pushing unit 40b, and the link unit 100 are housed in the concave part of the connection body 20. Among them, the link unit 100 has one part slidably engaged to a guide 30.
Fig. 3 shows the open state similar to Fig. 2 with a lid side guide cover 80a and a body side guide cover 80b detached.

The mobile telephone 1 includes equipment, for example, a control unit such as CPU for executing various control processes (not shown), a storage unit such as non-volatile memory for storing data and a program, a display unit such as the liquid crystal display 4 for displaying image, an operation input unit such as the input button 8 for accepting input operation, a voice communication unit for performing voice communication, a data communication unit for performing data communication, an imaging part such as a CCD camera for taking pictures, a voice output unit such as a speaker for output voice, and a voice collecting unit such as a microphone for collecting voices as electronic equipment, which are in an electrically connected state.

According to the above configuration, the lid 3 and the body 7 can be opened and spread out or closed by the connection unit 5. That is, they can be freely opened/closed from a fully closed state in which the surface of the liquid crystal display 4 of the lid 3 faces and superimposes the input button 8 of the body 7 to a fully open state in which the lid 3 and the body 7 are extended straightly. Therefore, the user can open/close the lid 3 and the body 7, as necessary, and conveniently uses the mobile telephone 1 in the open state or the closed state, and carry around the mobile telephone in the closed state to prevent unintended operation.

A configuration of the connection unit 5 will now be described.

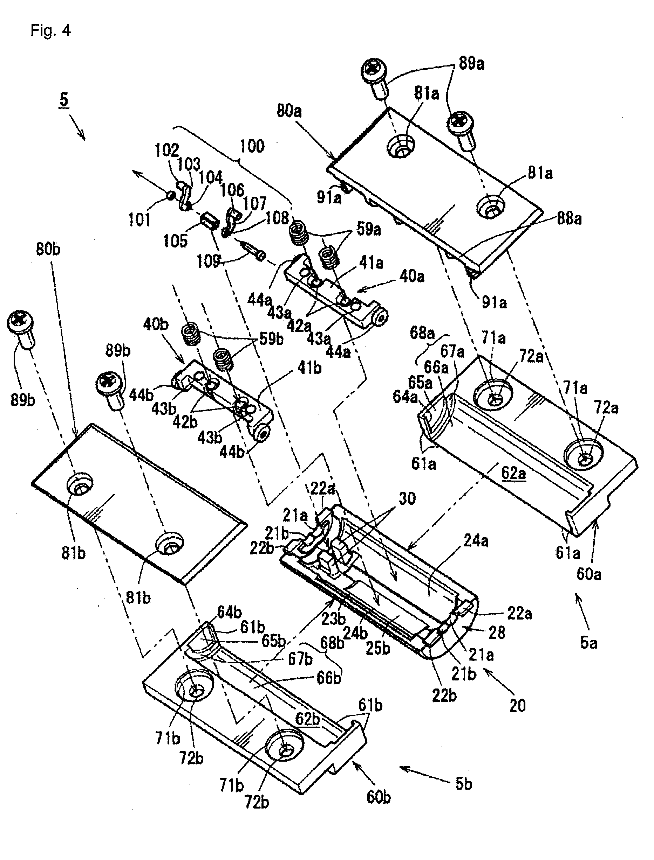

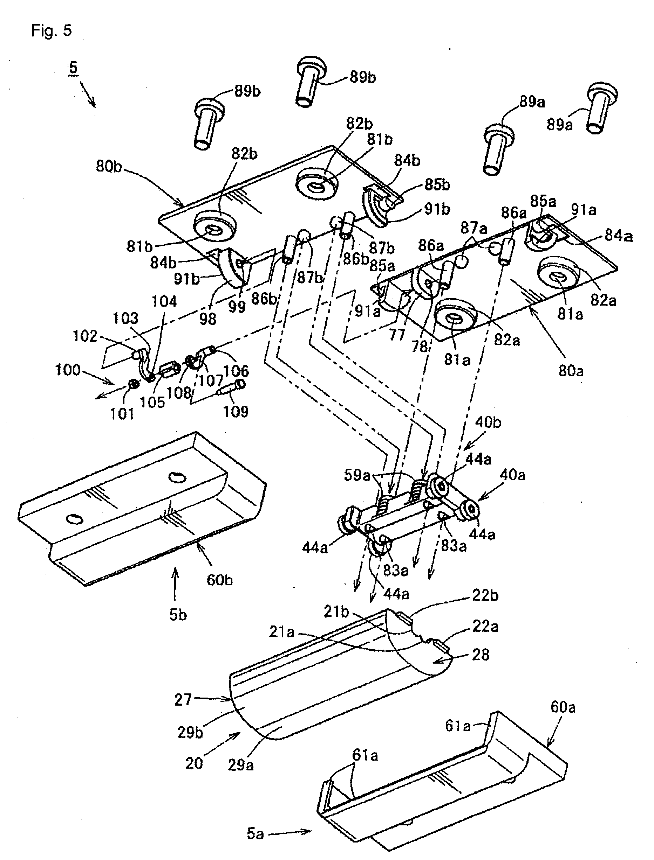

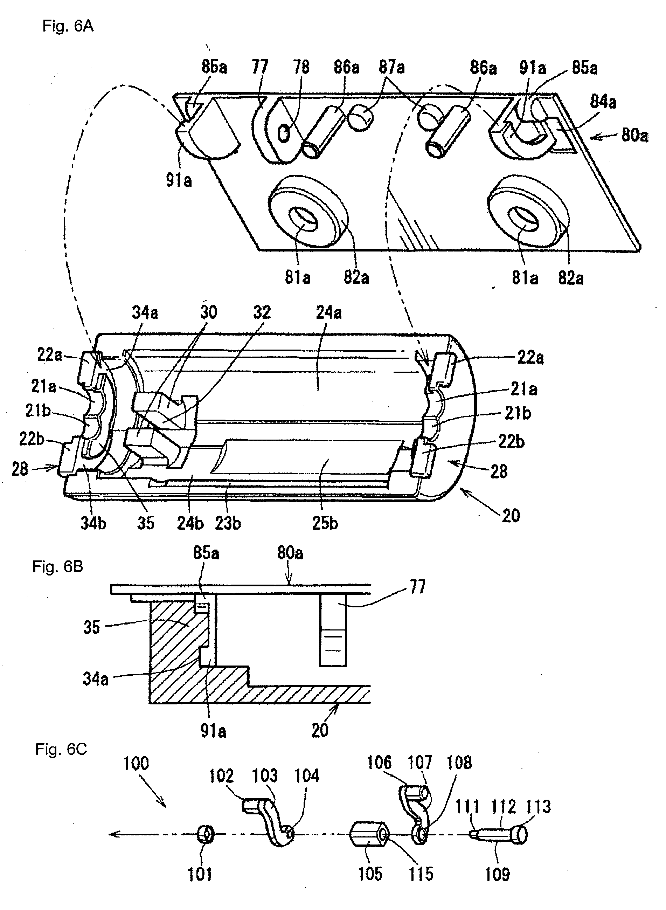

Fig. 4 is an exploded perspective view of the connection unit 5 seen from diagonally above, Fig. 5 is an exploded perspective view of the connection unit 5 seen from diagonally below, and Figs. 6A to 6C are partially enlarged explanatory views.

The connection unit 5 is configured by the lid side unit 5a attached to the lid 3 (Fig. 2), the body side unit 5b attached to the body 7 (Fig. 2), the connection body 20 housed between the lid side unit 5a and the body side unit 5b, and the link unit 100 for adjusting the ratio of the advance/retreat amount of the connection body 20 into/from the lid side unit 5a and the body side unit 5b.

In each figure, "a" is denoted on the reference numeral for components of the lid side unit 5a, and "b" is denoted on the reference numeral for components of the body side unit 5b. Furthermore, with regards to the connection unit 20, "a" is denoted on the reference numeral for components that act on the lid side unit 5a, and "b" is denoted on the reference numeral for components that act on the body side unit 5b.

The lid side unit 5a has a width and a thickness of about the same extent as the lid 3 (Fig. 2), and is configured by the lid side guide body 60a, the lid side guide cover 80a attached to the front surface of the lid side guide body 60a, and the lid side pushing unit 40a slidably attached to the lid side guide cover 80a.

The outer shape of the lid side guide body 60a has a rectangular shape when seen from the connection side and a reverse L-shape in side view. A concave part 62a that becomes the advance/retreat space into/from which the connection body 20 advances/retreats is formed on the side connecting with the body side unit 5b.

The shape of the concave part 62a is formed to a cavity of horizontal fan column shape in which the rectangle of a constant width (about 90% to 95% of the entire width in the present embodiment) is rotated by 1/4 from the open/close inner surface to the connection side end face with the corner side of the connection side end face (lower left side of Fig. 4) and the open/close inner surface (upper side of Fig. 4) as the axis.

Therefore, a circular arc face 66a having a width that draws a circular arc from the open/close inner surface towards the connection side end face, and a perpendicular wall face 67a upstanding at right angle from both left and right ends of the circular arc face 66a towards the axis core of the circular arc are formed on the connection side of the lid side guide body 60a, where the two left and right wall faces 67a and the circular arc face 66a configure an advance/retreat guide 68a.

A concave part that becomes concave towards left and right outer sides at positions spaced apart by a constant distance towards the axis core from the circular arc face 66a is formed in each wall face 67a, which concave part forms a slip-out preventing projection groove 65a having a fan shape in side view.
A locking side 64a upstanding at right angle by a constant distance towards the inner side in the axial direction is connected to the connection side end of each slip-out preventing projection groove 65a.

Two fit-in grooves 71 a for fitting in the lid side guide cover 80a are formed on the left and the right at the open/close outer side portion (portion on the side opposite to the connection side) of the lid side guide body 60a. A screw hole 72a for screw fixing the lid side unit 5a to the lid 3 is formed at the center of each fit-in groove 71 a. The screw 89a inserted to the screw hole 81 a of the lid side guide cover 80a and is screw-fit to the screw hole 72a, whereby the lid side guide body 60a and the lid side guide cover 80a are fixed. The screw 89a is further screw-fit to a screw hole (not shown) formed in the lid 3, whereby the lid side unit 5a is fixed to the lid 3.
The lid side guide cover 80a and the body side guide cover 80b may not be formed with screw holes 81 a, 81 b, and may be fixed through methods other than screw fixation.

The outer shape of the lid side guide cover 80a is formed to a plate form of rectangular shape having the same size in plan view as the lid side guide body 60a, where chamfering is performed on the connection side end on the front surface to form an inclined part 88a. Two screw holes 81 a are symmetrically formed near the open/close outer side of the front surface.

As shown in Fig. 5, the slip-out prevention turning shaft 85a, a slide stabilizing guide 91 a, a push direction regulating guide 86a, and a spring locking projection 87a are symmetrically arranged in order from the outer side on the connection side at the back surface of the lid side guide cover 80a. A link pivot attachment part 77 is arranged between the push direction regulating guide 86a on the left side and the slip-out prevention turning shaft 85a.

The link pivot attachment part 77 is arranged in an upstanding manner so as to project downward at the back surface of the lid side guide cover 80a, and a pivot attachment hole 78 passing through in the left and right direction is formed near the center. The pivot attachment hole 78 is formed within a range of the same distance as a thickness D (see Fig. 2) of the lid side unit 5a from the connection side end face of the lid side unit 5a.

The slip-out prevention turning shaft 85a is arranged at a position proximate to the side surface of the lid side guide cover 80a, and is formed to a horizontal semi-circular cylinder shape.
The push direction regulating guide 86a is formed by a circular cylinder projection arranged in an upstanding manner at right angles on the back surface of the lid side guide cover 80a.

The spring locking projection 87a is arranged in an upstanding manner on the back surface of the lid side guide cover 80a, and is formed by a projection shorter than the push direction regulating guide 86a. The spring locking projection 87a is inserted to one end of the coil spring 59a, which is one type of elastic body.

The slide stabilizing guide 91 a is a circular arc shaped guide of 1/4 circle that becomes a concentric circle with the slip-out prevention turning shaft 85a, and is symmetrically arranged on the back surface of the lid side guide cover 80a.

A slip-out preventing projection housing groove 84a having a rectangular shape long in the connecting direction (direction from upper right to lower left of Fig. 4, direction from lower right to upper left of Fig. 5) is symmetrically arranged proximate to the side of the open/close outer side from the slip-out prevention turning shaft 85a and 85b.

A fit-in projection 82a projecting in a ring form is symmetrically arranged at the vicinity of the open/close outer side of the back surface of the lid side guide cover 80a, and the screw hole 81 a is formed at the center of each fit-in projection 82a.

The lid side pushing unit 40a is configured by a lid side pushing base 41 a, a roller 44a, and a coil spring 59a.
The lid side pushing base 41 a is formed to a column shape that is entirely long in the width direction, and two spring attachment parts 42a to which the coil spring 59a is extensibly attached are symmetrically arranged on the open/close inner surface side (upper side of Fig. 4).

A guide hole 43a passing from the open/close inner surface (upper side of Fig. 4) to the open/close outer surface (lower side of Fig. 4) is formed further on the outer side of the spring attachment part 42a. The push direction regulating guide 86a (see Fig. 5) of the lid side guide cover 80a is inserted to the guide hole 43a. The lid side pushing base 41 a then can move forward and backward from the front surface (upper side of Figs. 4 and 5) to the rear surface (lower side of Figs. 4 and 5) while maintaining a parallel state without rattling.

The circular disc shaped roller 44a with thickness is symmetrically and coaxially axial supported at both side surfaces of the lid side pushing base 41 a. The roller 44a is arranged at a position the outer peripheral surface projects to the lower side from the bottom surface of the pushing base 41.

The connection body 20 has a side wall 28 raised at right angles arranged at left and right side ends of a slide plate 27 of a substantially semicircular shape.
Shaft contacting grooves 21 a, 21 b cut to a circular arc shape when seen from the lower right of Fig. 4 are connected in a connecting direction at the center of each upper surface of the side wall 28, and the slip-out preventing projections 22a, 22b are symmetrically arranged in the connecting direction on the outer side of the connecting direction.

As shown in Fig. 5, the outer periphery of the slide plate 27 has the circular arc outer peripheral surface 29a formed to a circular arc having the lid turning axis (not shown) or the center of the circular arc of the shaft contacting groove 21 a as an axis core, and a circular arc outer peripheral surface 29b formed to a circular arc having a body turning axis (not shown) or the center of the circular arc of the shaft contacting groove 21 b as an axis core symmetrically connected in the connecting direction. The circular arc outer peripheral surface 29a surface corresponds to the circular arc face 66a of the lid side guide body 60a, and the circular arc outer peripheral surface 29b surface corresponds to the circular arc face 66b of the body side guide body 60b.

As shown in the enlarged perspective view of Fig. 6A, the inner periphery of the slide plate 27 has a circular arc inner peripheral surface 24a curved on the inner side of a constant distance from the circular arc outer peripheral surface 29a with the lid turning axis as the axis core, and a circular arc inner peripheral surface 24b curved on the inner side of a constant distance from the circular arc outer peripheral surface 29b with the body turning axis as the axis core symmetrically connected in the connecting direction.

A locking concave part 25b of the same circular arc shape as the roller 44b (Fig. 4) or of a circular arc shape smaller than the roller 44b is arranged lined in the connecting direction at the circular arc inner peripheral surface 24b. A locking concave part 23b is also formed at the end on the front surface side (end on lower side of Fig. 4) of the circular arc inner peripheral surface 24b.
In this embodiment, the locking concave part 23b and the locking concave part 25b are arranged only on the body side, but the locking concave part 23a (not shown) and the locking concave part 25a (not shown) may be arranged on the lid side.

A curved w-shaped convex part 35 is symmetrically arranged on each inner surface of the left and right side walls 28. The slide stabilizing grooves 34a, 34b of circular arc shape are formed at a portion sandwiched by a curved outer side surface of the convex part 35 and the inner surface of the slide plate 27. As shown in the cross sectional view of Fig. 6B, a slide stabilizing guide 91 a of the lid side guide cover 80a engages the slide stabilizing groove 34a. The connection body 20 is then smoothly and stably advanced and retreated while drawing a circular arc from the concave part 62a of the lid side unit 5a.

The guide 30 rising perpendicular towards the open/close inner surface at a position slightly apart from the side wall 28 on the left side is arranged on the inner surface of the connection body 20. The guide 30 has a slide space 32 at the center formed perpendicularly and in parallel.

As shown in the perspective view of Fig. 6C, the link unit 100 is configured by a shaft member 109, a lid side arm 107 for inserting the shaft member 109, a slide body 105, a body side arm 103, and a slip-out preventing cap 101.

The shaft member 109 has an attachment convex part 111 arranged at one end of a shaft part 112 of cylindrical shape, and a slip-out preventing shaft head 113 arranged at the other end.
The lid side arm 107 has a shaft insertion hole 108 formed at one end and a pivot attachment projection 106 arranged at the other end. The shape of the lid side arm itself is curved and formed to a substantially L-shape in left side view of Fig. 6C.

The slide body 105 has a square column shape with the corners cut off, and is formed with a shaft insertion hole 115 for inserting the shaft member 109. Two opposing surfaces (horizontal surfaces) of square column shape contact the opposing surface of the guide 30 (see Fig. 6B) of the connection body 20, and slides while being stabilized in the up and down direction. That is, the slide body 105 is slidably and movably supported by the guide 30 in a slidable manner.

The body side arm 103 has a shaft insertion hole 104 formed at one end, and a pivot attachment projection 102 arranged at the other end. The shape of the body side arm 103 itself is curved and formed to a substantially L-shape in right side view of Fig. 6C.
The slip-out preventing cap 101 has a ring shape, and is attached with the attachment convex part 111 of the shaft member 109.

Therefore, the shaft part 112 of the shaft member 109 is inserted to the shaft insertion hole 108 of the lid side arm 107, the shaft insertion hole 115 of the slide body 105, and the shaft insertion hole 104 of the body side arm 103 in this order. The slip-out preventing cap 101 is attached and fixed to the attachment convex part 111 of the shaft member 109. The body side arm 103, the slide body 105, and the lid side arm 107 are thereby united while being independently turnable with the shaft member 109 as the axis. The united link unit 100 has a substantially w shape when seen from the side view of Fig. 6C.
The pivot attachment projection 102 of the body side arm 103 is pivotally attached to the pivot attachment hole 99 of the guide plate 98, and the pivot attachment projection 106 of the lid side arm 107 is pivotally attached to the pivot attachment hole 78 of the link pivot attachment part 77.

The body side unit 5b shown in Figs. 4 and 5 has a width and a thickness of about the same extent as the body 7 (see Fig. 2), and is configured by a body side guide body 60b, a body side guide cover 80b attached to the front surface of the body side guide body 60b, and a body side pushing unit 40b slidably attached to the body side guide cover 80b. Each of such elements are configured symmetric to the connecting direction with the lid side unit 5a as described above other than the non-symmetric portion described below, and thus the description thereof will be omitted.

The non-symmetric portion is a portion that does not have the link pivot attachment part 77 (see Fig. 5) arranged at the body side guide cover 80b, and instead, has the guide plate 98 with the slide stabilizing guide 91 b on the left side formed to a thick thickness, and a pivot attachment hole 99 passing through in the left and right direction formed near the center of the guide plate 98. The pivot attachment hole 99 is arranged within a range of the same distance as the thickness D (see Fig. 2) of the body side unit 5b from the connection side end face of the body side unit 5b.

In this embodiment, the connection body 20, the guide body 60 (60a, 60b), and the guide cover 80 (80a, 80b) are formed with metal members, and the pushing base 41 (41 a, 41 b) and the roller 44 (44a, 44b) are formed with resin members, but are not limited thereto, and may be formed with appropriate raw materials.
The connection unit 5 is completed by combining each element configured as above.

The opening/closing operation of the connection unit 5 performed when the connection body 20 advances/retreats into/from the lid side unit 5a and the body side unit 5b, and the opening/closing operation of the mobile telephone 1 will now be described.

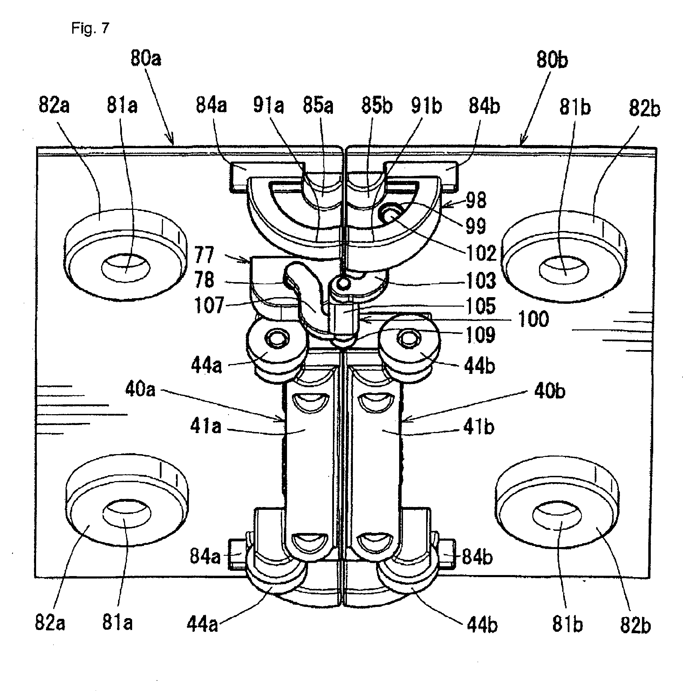

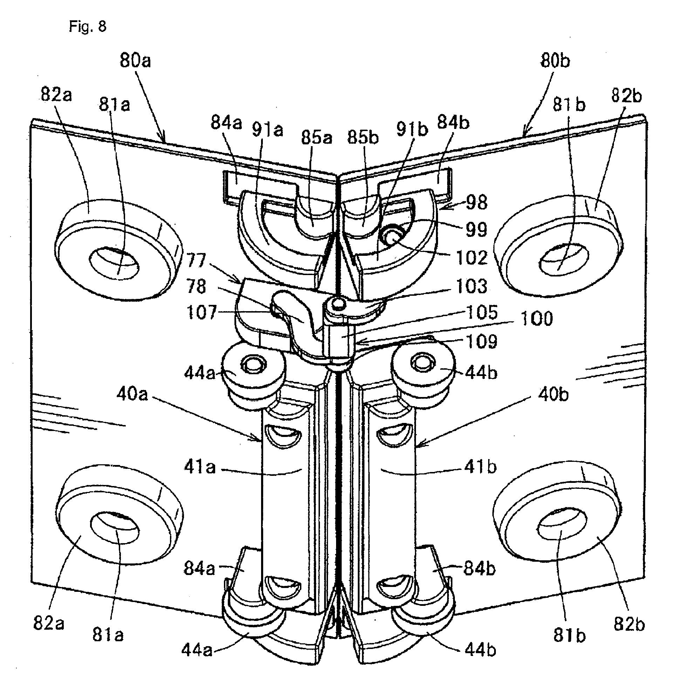

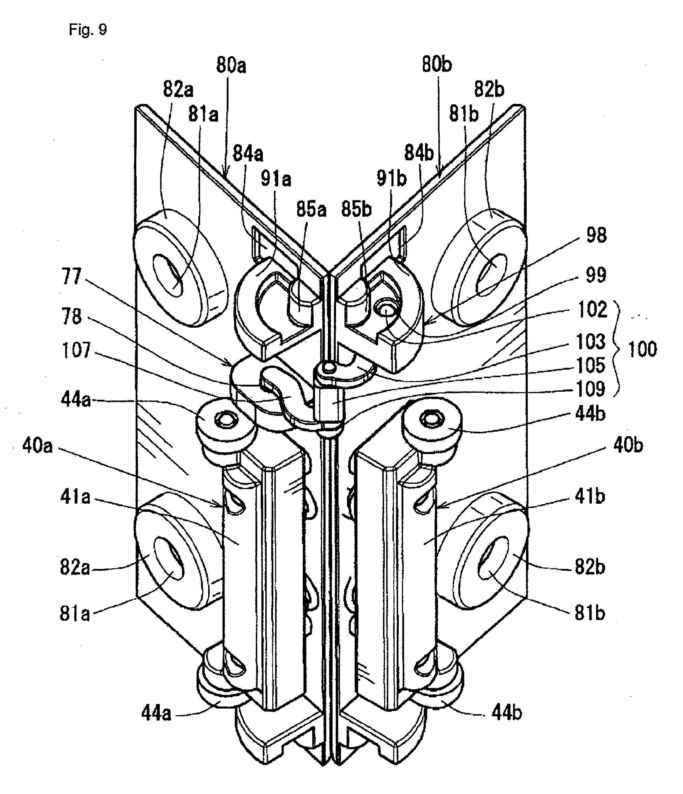

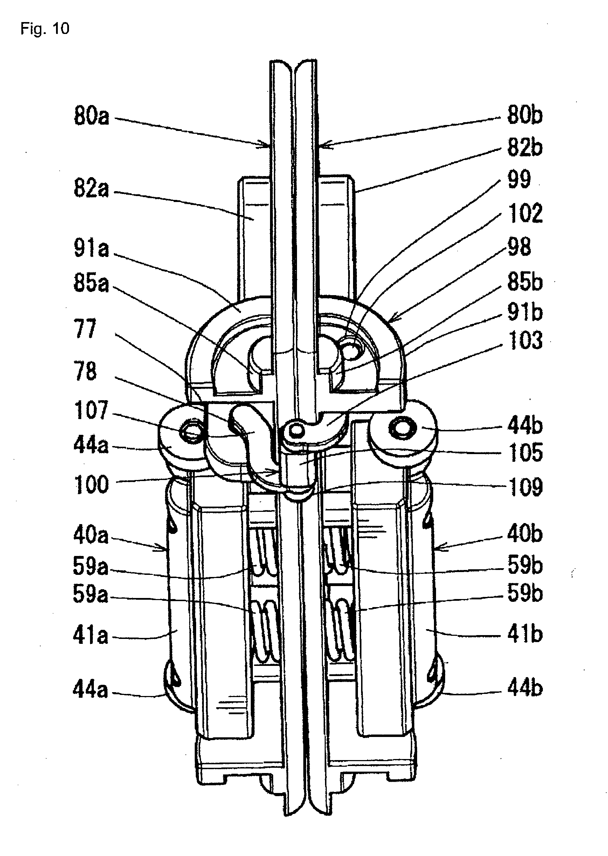

Fig. 7 is a perspective view of one part of the connection unit 5 in the open state, Fig. 8 is a perspective view of one part of the connection unit 5 slightly changed towards the closing direction from the open state, Fig. 9 is a perspective view of one part of the connection unit 5 further changed towards the closing direction, and Fig. 10 is a perspective view of one part of the connection unit 5 in the closed state. Fig. 7 to Fig. 10 show views seen from the lower left position in Fig. 5.

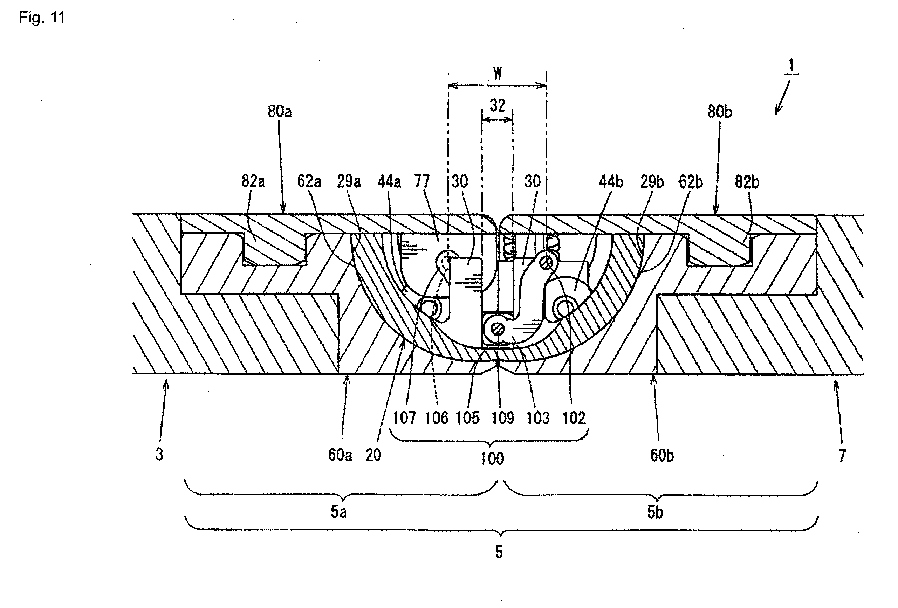

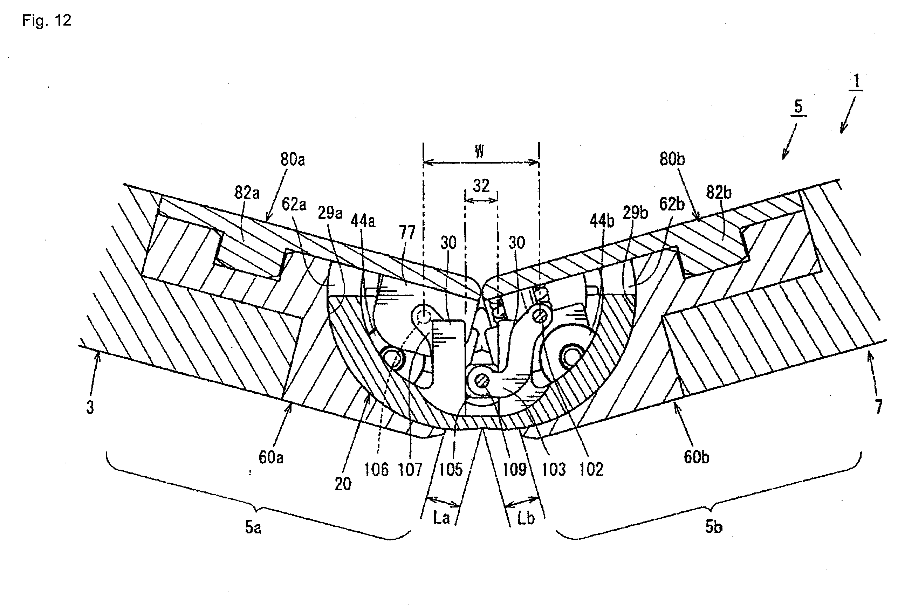

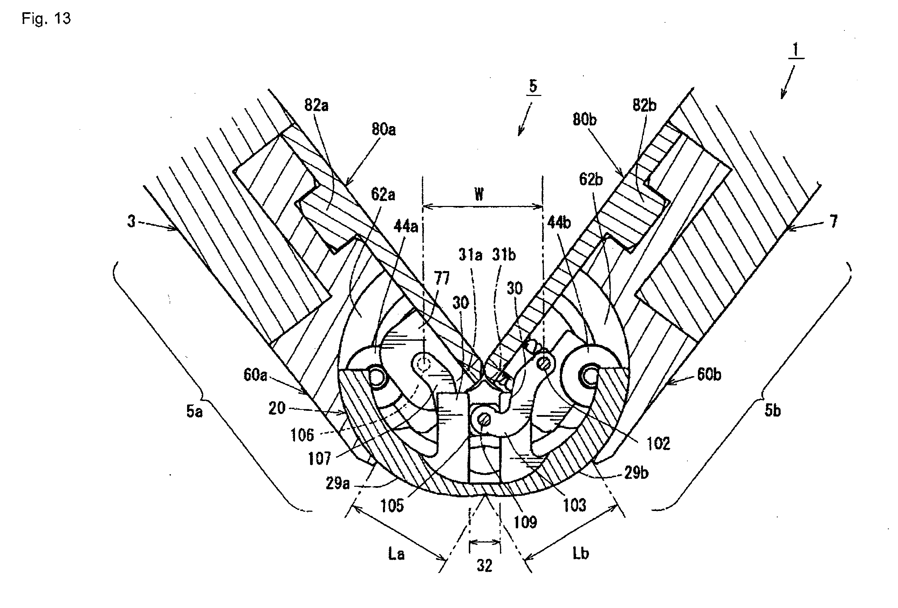

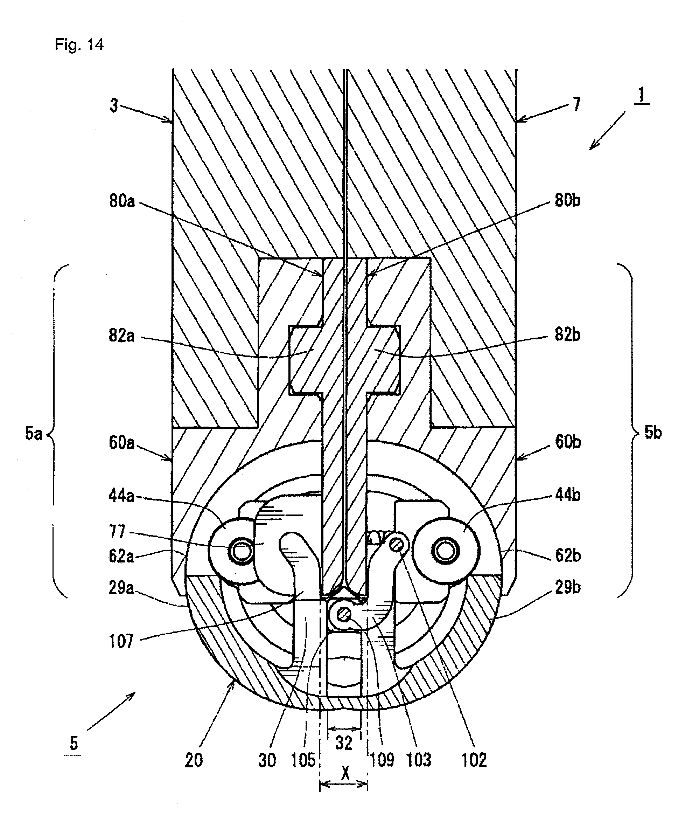

Fig. 11 is an enlarged cross sectional view of the connection unit 5 portion in the open state, Fig. 12 is an enlarged cross sectional view of the connection unit 5 portion slightly changed towards the closing direction from the open state, Fig. 13 is an enlarged cross sectional view of the connection unit 5 portion further changed towards the closing direction, and Fig. 14 is an enlarged cross sectional view of the connection unit 5 portion in the closed state. Fig. 11 to Fig. 14 show cross sectional views taken along line A-A in Fig. 3.

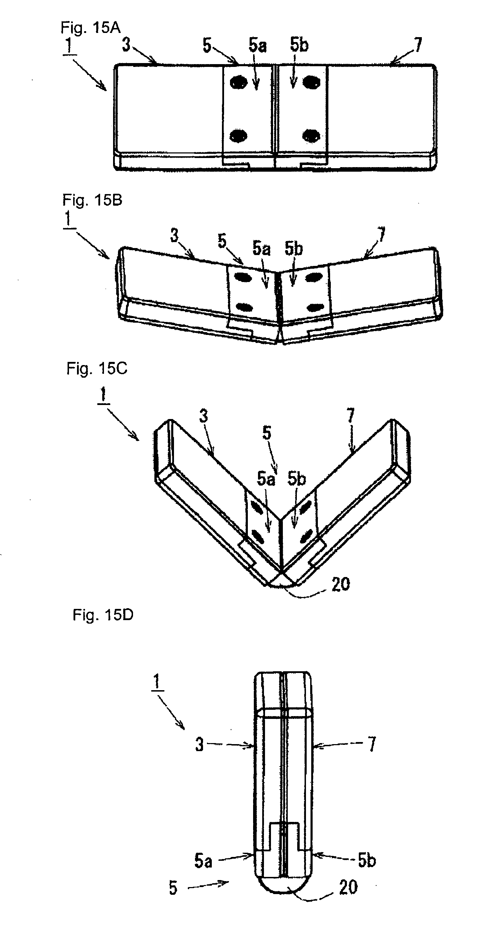

Figs. 15A to 15D are explanatory views describing a mobile telephone 1 in each state changing from the open state to the closed state in a perspective view.

In the open state, the lid 3 attached with the lid side unit 5a (see Fig. 11) and the body 7 attached with the body side unit 5b are opened 180 degrees forming a rectangular solid body as a whole, as shown in Fig. 7, Fig. 11, and Fig. 15A.

In this case, the connection body 20 is completely housed in the concave part 62a (see Fig. 4) of the lid side unit 5a and the concave part 62b in the body side unit 5b, and cannot be visibly recognized from the outside. As shown in Fig. 11, the slide body 105 of the link unit 100 approaches the base of the guide 30 the most.

Furthermore, the roller 44b of the body side pushing unit 40b is locked by contacting the locking concave part 25b (see Fig. 4) of the connection body 20. Therefore, the lid side unit 5a and the body side unit 5b do not transition to the closed state with slight force due to the biasing force of the coil spring 59b, and the open state can be maintained. In Fig. 4, the locking concave part 25b is formed only on the body side pushing unit 40b side, but the locking concave part may also be formed on the lid side pushing base 41 a side. In this case, the roller 44a of the lid side pushing unit 40a is locked at the locking concave part, and the open state can be maintained with a stronger force.

When the user manually applies force so that the lid 3 and the body 7 are folding operated from the open state in the closing direction, the roller 44b moves out from the locking concave part 25b at the point the relevant force exceeds the biasing force of the coil spring 59b, whereby the lid 3 attached with the lid side unit 5a (see Fig. 11) and the body 7 attached with the body side unit 5b transition to a slightly bent state, as shown in Fig. 8, Fig. 12, and Fig. 15B. When the roller 44b moves out from the locking concave part 25b, the user feels a clicking feeling or a satisfactory operation feeling.

In transitioning towards the closing direction, the lid side unit 5a turns with the slip-out prevention turning shaft 85a (see Fig. 8) as a virtual rotation axis, and the body side unit 5b turns with the slip-out prevention turning shaft 85b (see Fig. 8) as a virtual rotation axis. The pivot attachment projection 102 of the body side arm 103 and the pivot attachment projection 106 of the lid side arm 107 turn in conjunction with the shaft member 109 as the center.

According to such turning, the link pivot attachment part 77 and the guide plate 98 separate as shown in Fig. 8, and the interval W between the pivot attachment projection 102 of the body side arm 103 and the pivot attachment projection 106 of the lid side arm 107 becomes wider than in the open state as shown in Fig. 12. Thus, the slide body 105 of the link unit 100 slidably moves in a straight line from the base towards the distal end side of the guide 30 in the slide space 32 of the guide 30. Therefore, the ratio between the advance/retreat distance La (see Fig. 12) the connection body 20 advances from the lid side unit 5a and the advance/retreat distance Lb (see Fig. 12) the connection body 20 advances from the body side unit 5b becomes one to one, and thus equally advances. A stable and smooth operation feeling is thereby obtained.

When folding operated further in the closing direction, the state transitions to the bent state, as shown in Fig. 9, Fig. 13, and Fig. 15C. In the middle of transitioning, the interval W becomes a maximum when the virtual turning axis 31 a of the lid side unit 5a and the virtual turning axis 31 b of the body side unit 5b are positioned on a line connecting the pivot attachment projection 102 of the body side arm 103 and the pivot attachment projection 106 of the lid side arm 107, as shown in Fig. 13, and thereafter, the interval W becomes smaller. Meanwhile, the slide body 105 of the link unit 100 continues to move from the base towards the distal end of the guide 30 in the slide space 32 of the guide 30. The ratio of the advanced amount of the connection body 20 from the lid side unit 5a and the advanced amount of the connection body 20 from the body side unit 5b is maintained to one to one, and thus is always equally advanced.

When further folding operated in the closing direction, the state transitions to a completely folded closed state, as shown in Fig. 10, Fig. 14, and Fig. 15D. As shown in Fig. 14, the slide body 105 of the link unit 100 is positioned in the slide space 32 at a position closest to the distal end of the guide 30.

The lid side arm 107 and the body side arm 103 are curved and formed so that the side surfaces on the opposing sides thereof become concave. Thus, a gap X is ensured between the body side arm 103 and the lid side arm 107, and the lid side guide cover 80a and the body side guide cover 80b are held in the gap X.
When transitioning from the closed state to the open state, operation completely opposite to that in transitioning towards the closing direction is performed.

According to such an operation, the connection body 20 advances/retreats drawing a circular arc with respect to the lid side unit 5a and the body side unit 5b, and a mobile telephone 1 having a novel configuration in which the lid 3 and the body 7 open/close can be provided.

In opening/closing, the connection body 20 equally advances/retreats with respect to the lid side unit 5a and the body side unit 5b by the function of the link unit 100, and a stable operation symmetric at the center of the folding can be performed.

The connection body 20 slidably turns and advances/retreats with the circular arc outer peripheral surface 29a (see Fig. 5) contacting the circular arc face 66a of the lid side guide body 60a (see Fig. 4), and thus advances/retreats without being caught. In particular, when the slide stabilizing guide 91 a (see Fig. 6A) arranged on the lid side guide cover 80a and the stabilizing groove 34a (see Fig. 6B) arranged on the connection body 20 engage, a more stable slide turn can be realized, and a smooth advancement/retreatment can be reliably realized.

The concave part 62a and 62b are arranged in the connection part of the lid 3 and the connection part of the body 7, respectively, where one end side of the connection body 20 is attached to advance into and retreat from the concave part 62a, and the other end side of the connection body 20 is attached to advance into and retreat from the concave part 62b. Therefore, in the fully open state, the connection body 20 can be housed in the concave parts 62a, 62b and be hidden, whereby the appearance of the mobile telephone 1 improves.

The connection body 20 can be advanced/retreated in a circular arc form from the concave part 62 (62a, 62b) by arranging the advance/retreat guide 68 (68a, 68b) for advancing/retreating the connection body 20 while drawing a circular arc with the slip-out prevention turning shaft 85 (85a, 85b) as a virtual axis core at the lid side unit 5a and the body side unit 5b, and arranging the side wall 28 and the circular outer peripheral surface 29 (29a, 29b) on the connection body 20. In the open state, the connection body 20 is housed in the concave part 62, and in transitioning from the open state to the closed state, the connection body 20 advances in a circular arc form from the concave part 62 thereby allowing the lid 3 and the body 7 to be in the closed state.

The advance/retreat guide 68 is formed with different circular arc axes with the axis of the circular arc face 66a on the lid 3 side as the lid turning axis 31 a (see Fig. 13) and the axis of the circular arc face 66b on the body 7 side as the body turning axis 31 b, whereby a moderate opening/closing operation can be realized in the fully closed state, the fully opened state, and the state in between.

A configuration of arranging the locking concave parts 23b, 25b and the pushing unit 40b for locking the advancement/retreatment of the connection body 20 with respect to the concave part 62 when the open/close angle of the lid 3 and the body 7 becomes a constant angle, and fitting and locking the roller 44b of the pushing unit 40b into the locking concave 23b, 25b by the biasing force of the coil spring 59b is adopted. Therefore, the lid 3 and the body 7 can be stabilized at a constant angle of 0° and 180°, and the operability of the user improves. The locking open/close angle is not limited thereto, and the locking concave part may be formed to lock the advancement/retreatment at other angles, or the locking concave part may be formed while setting three or more angles for locking advancement/retreatment.

The force for stabilizing the lid 3 and the body 7 at a constant angle can be easily adjusted by the biasing force of the coil spring 59 by using the coil spring 59 (59a, 59b) for providing the biasing force to the pushing unit 40, and an open/close mechanism of a moderate clicking feeling can be easily provided.

Furthermore, from the fully open state to the closed state (up to right before the fully closed state), the connection body 20 can be prevented from slipping out from the lid side unit 5a and the body side unit 5b since the slip-out prevention turning shafts 85a, 85b are contacting the shaft contacting grooves 21 a, 21 b. In the fully closed state, the connection body 20 can be prevented from slipping out from the lid side unit 5a and body side unit 5b since the slip-out preventing projections 22a, 22b are contacting the locking sides 64a, 64b.

The pushing unit for positioning the open/close position includes the lid side pushing unit 40a and the body side pushing unit 40b, but may only include either one. In this case, a satisfactory operation feeling for symmetrically opening/closing is obtained by the link unit 100.

The circular arc face 66a is provided to slidably advance/retreat the connection body 20 in a circular arc form, and thus is not limited to being configured with a plane, and may be formed to other shapes by arranging a plurality of circular arc shaped rails in the width direction etc. The two wall faces 67a are provided so that the connection body 20 does not rattle while sliding, and thus are not limited to perpendicular faces, and may be formed to other shapes.

The slip-out preventing projection groove 65a and the locking side 64a, and the slip-out preventing projection 22a of the connection body 20 are provided to prevent the connection body 20 from slipping out from the lid-side unit 5a, and thus are not limited to such shape and may be formed to other shapes. For instance, the concave part may be formed at one part of the circular arc face 66a to serve as the slip-out preventing projection groove 65a and the locking side 64a may be arranged on the connection end face 61 a side of the slip-out preventing projection groove 65a instead of arranging the slip-out preventing projection groove 65a and the locking side 64a at the side in the width direction. In this case, the slip-out preventing projection 22a of the connection body 20 is preferably arranged not on the side in the width direction of the connection body 20 but on the side end in the advancing/retreating direction.

The locking concave parts 23, 25 may not be arranged in the slide plate 27, and may be arranged on the inner surface of the side wall 28. In this case, the roller 44 is formed with a spherical body and biased towards the outer side in the width direction so as to be locked at the locking concave part arranged on the inner surface of the side wall 28. The mobile telephone 1 can be positioned at a predetermined open/close angle with such configuration, and a satisfactory clicking feeling can be obtained. The roller 44 may be non-rotatably formed with a slidable shape and raw material. In this case as well, the opening/closing operation is smoothly performed, and the open/close angle can be locked.

In the fully open state, a configuration of hiding the connection body 20 so as to be completely invisible is adopted, but a hole or a groove may be formed on the connection side of the lid side guide cover 80a and the body side guide cover 80b, so that the connection body 20 is partially visible even in the fully open state. In this case as well, a hinge will not project out and be seen as in the prior art, and a mobile telephone 1 of a smart design can be provided.

The lid 3 and the lid side guide body 60a are configured as separate bodies but may be integrally formed. The body 7 and the body side guide body 60b are configured as separate bodies but may be integrally formed.

### Embodiment 2

Embodiment 2 will now be described.

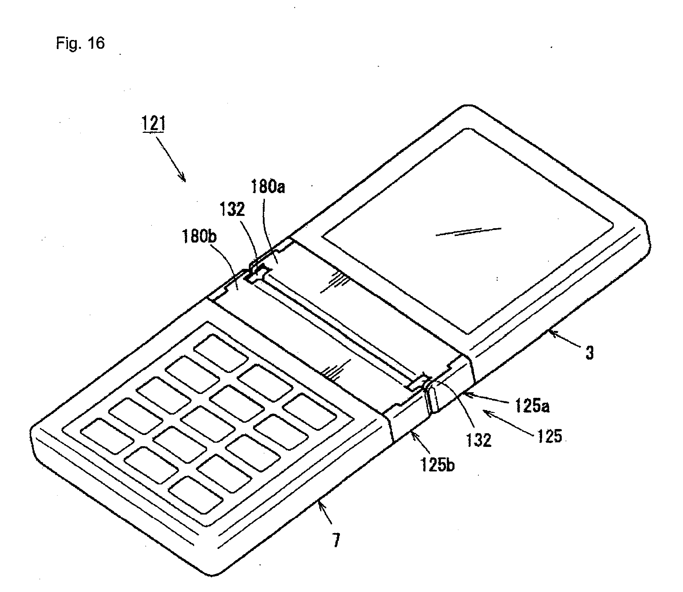

Fig. 16 is a perspective view of a mobile telephone 121 of Embodiment 2, and

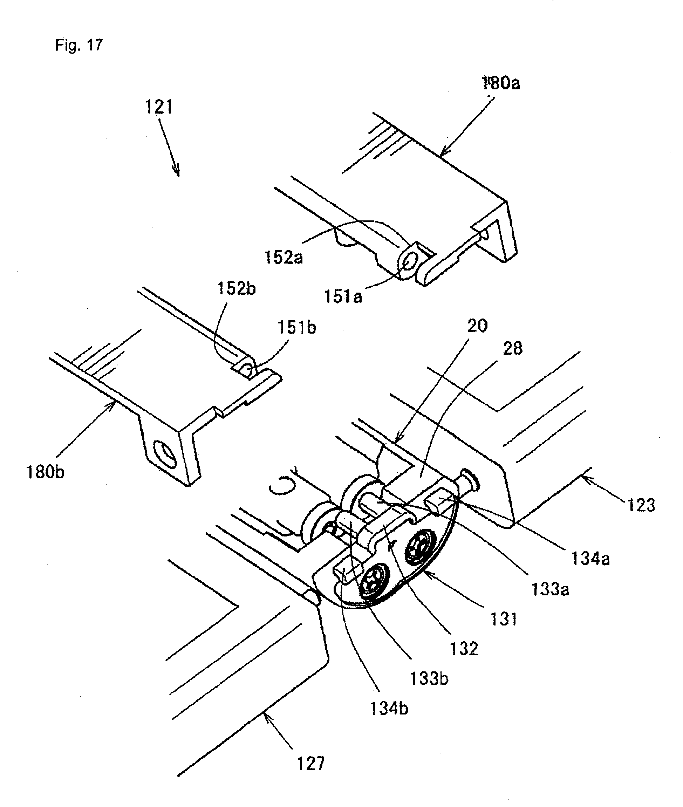

Fig. 17 is a partially exploded enlarged perspective view of the mobile telephone 121 of Embodiment 2.

In this case, a lid side unit 125a is fixed to a lid 3, a body side unit 125b is fixed to a body 7, and the lid side unite 125a and the body side unit 125b configure a connection unit 125.
A side wall member 131 is symmetrically arranged on the outer side of the side wall 28 of the connection body 20 to be housed in the connection unit 125 in the open state. The side wall member 131 has a bearing 132 arranged on the inner surface side (upper side of Fig. 16), and turning shafts 133a, 133b are arranged in parallel to the bearing 132. The turning shafts 133a, 133b are positioned at locations where the slip-out prevention turning shaft 85a of the lid side guide cover 80a and the slip-out prevention turning shaft 85b of the body side guide cover 80b in Embodiment 1 exist. Slip-out preventing projections 134a, 134b having the same effect as the slip-out preventing projections 22a, 22b (see Fig. 4) are formed on the side wall member 131.

A lid side guide cover 180a and a body side guide cover 180b have a configuration similar to the lid side guide cover 80a and the body side guide cover 80b in Embodiment 1 other than that groove holes 152a, 152b are formed at locations where the slip-out prevention turning shaft 85a (Embodiment 1) and the slip-out prevention turning shaft 85b (Embodiment 1) exist, and bearing holes 151 a, 151 b for bearing the turning shafts 133a, 133b are formed at the side surface of the groove holes 152a, 152b.

A guide body similar to the lid side guide body 60a and the body side guide body 60b of Embodiment 1 is arranged in the mobile telephone 121, but the illustration thereof is omitted in Fig. 17. Other components are the same as Embodiment 1, and thus the same reference numerals are denoted for the same components and detailed description thereof will be omitted.

According to the above configuration, opening/closing in a novel structure can be realized, and a more stable turn can be realized compared to the virtual axis of Embodiment 1.
The connection body 20 is prevented from slipping out from the lid side unit 5a and the body side unit 5b.
Looking at the outer appearance of the mobile telephone 121, the bearing 132 is slightly visible on the inner side surface in the open state, but other portions are not visible, and a solid rectangular shape is obtained as a whole in the open state.

### Embodiment 3

Embodiment 3 will now be described.

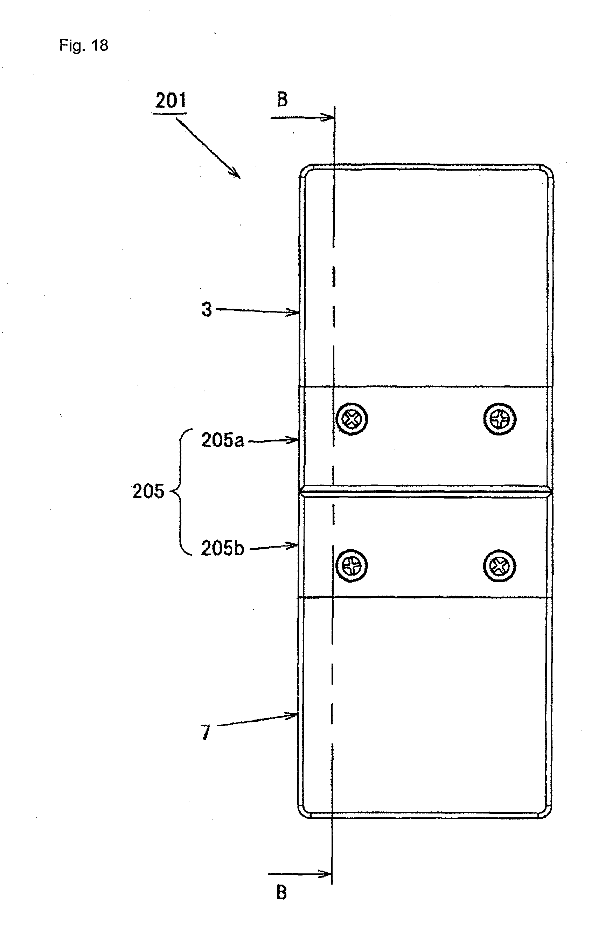

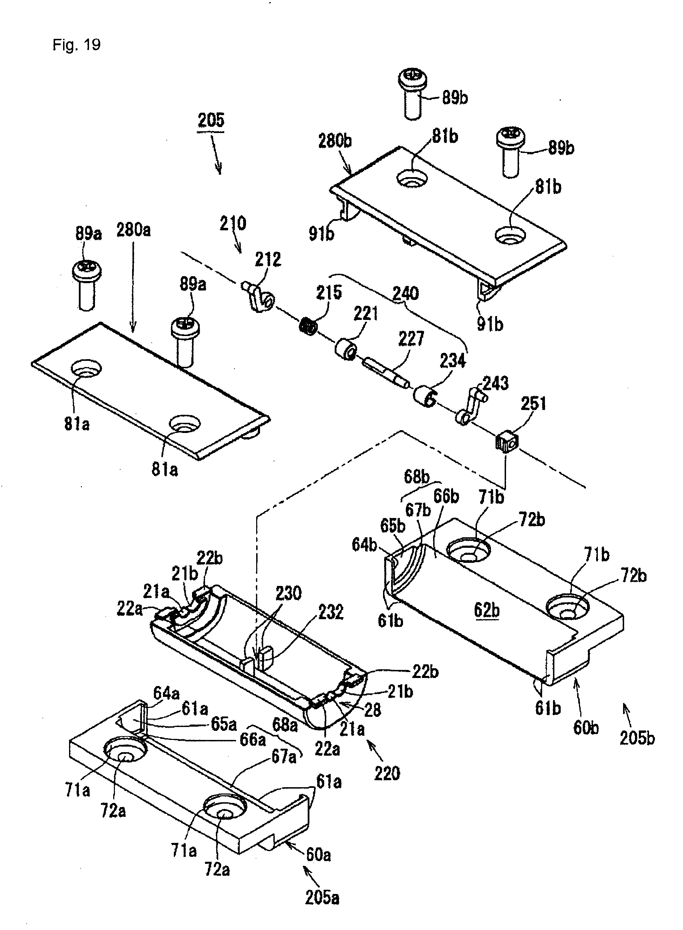

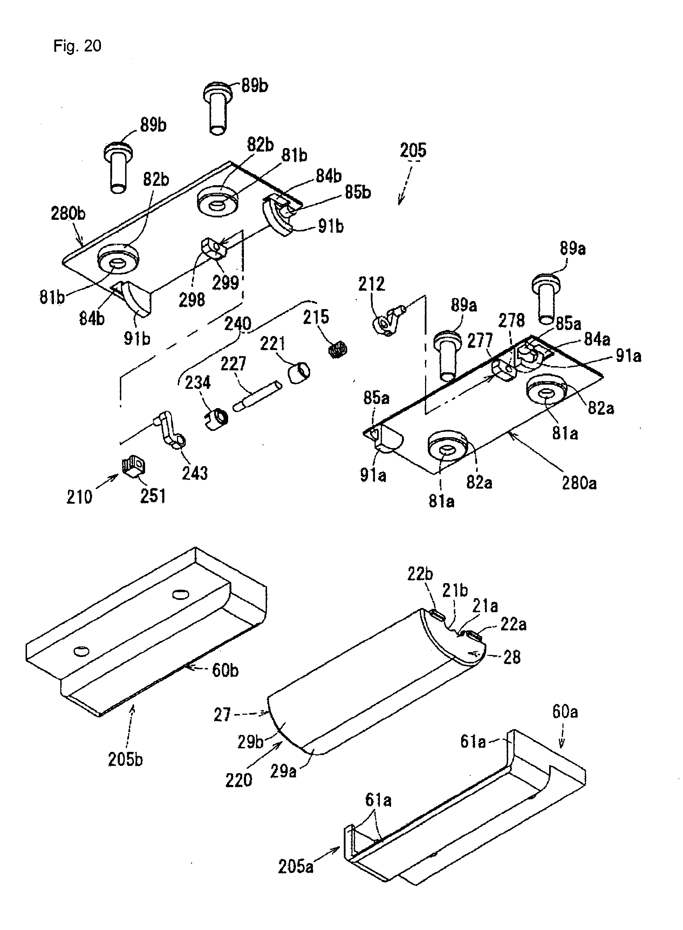

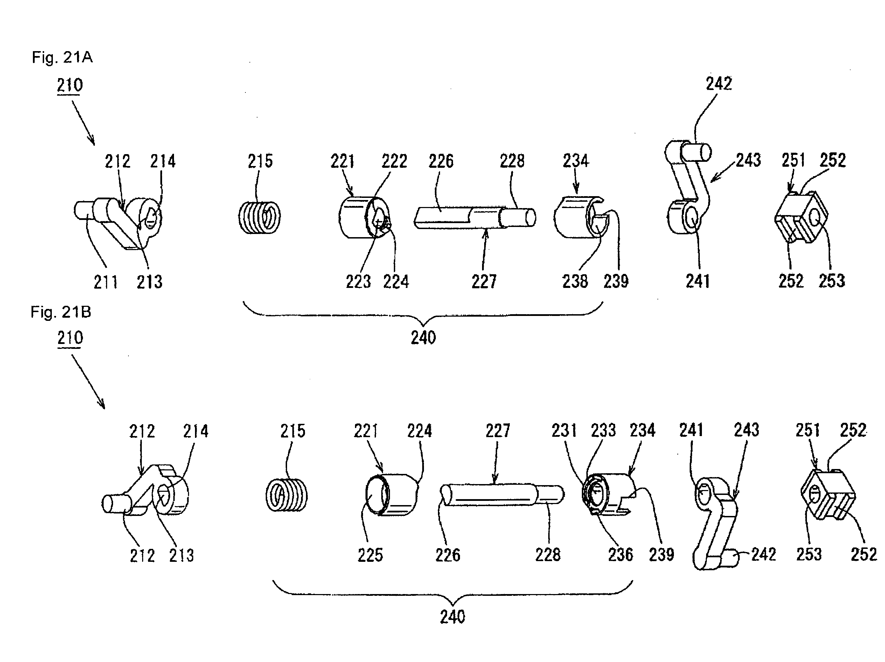

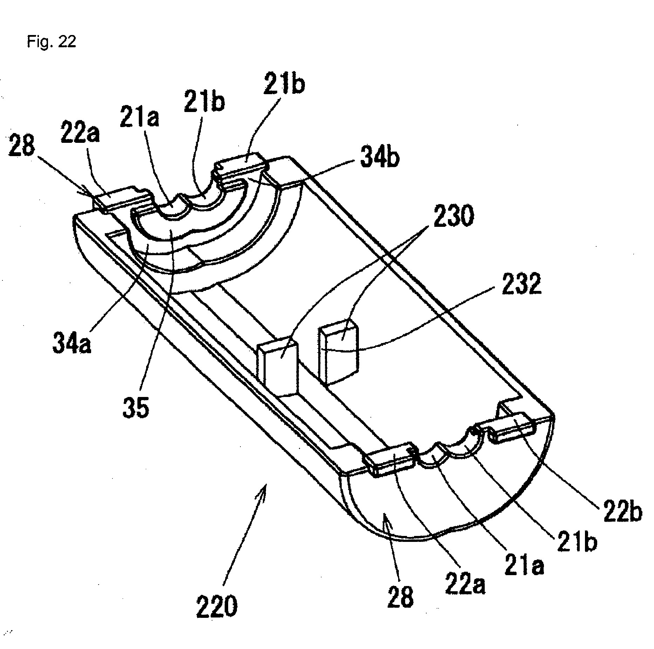

Fig. 18 is a plan view of a mobile telephone 201 of Embodiment 3, Fig. 19 is an exploded perspective view of a connection unit 205 seen from diagonally above, Fig. 20 is an exploded perspective view of the connection unit 205 seen from diagonally below, Fig. 21 is an explanatory view of a link unit 210 in an exploded perspective view, and Fig. 22 is a perspective view of a connection body 220.

The mobile telephone 201 includes the lid 3 and the body 7 same as the mobile telephone 1 of Embodiment 1. A lid side connection unit 205a corresponding to the lid side unit 5a (see Fig. 2) of Embodiment 1 is attached to the lid 3, and a body side connection unit 205b corresponding to the body side unit 5b (see Fig. 2) of Embodiment 1 is attached to the body 7.

The connection body 220 (see Fig. 19) and the link unit 210 are housed in the connection part of the lid side connection unit 205a and the body side connection unit 205b in the open state. The link unit 210, the connection body 220, the lid side connection unit 205a, and the body side connection unit 205b configure a connection unit 205.

The lid side connection unit 205a is configured by the lid side guide cover 280a and the lid side guide body 60a, and the body side connection unit 205b is configured by the body side guide cover 280b and the body side guide body 60b.

The lid side guide cover 280a is the same as the lid side guide cover 80a of Embodiment 1 other than that the pushing direction regulating guide 86a (see Fig. 5) and the spring locking projection 87a of Embodiment 1 are not arranged, and a guide plate 277 (see Fig. 20) projecting downward is arranged.
A pivot attachment hole 278 passing through in the width direction of the mobile telephone 201 is formed in the guide plate 277.

The body side guide cover 280b is the same as the body side guide cover 80b of Embodiment 1 other than that the pushing direction regulating guide 86b (see Fig. 5) and the spring locking projection 87b of Embodiment 1 are not arranged, and a guide plate 298 (see Fig. 20) projecting downward is arranged in place of the guide plate 98.
A pivot attachment hole 299 passing through in the width direction of the mobile telephone 201 is formed in the guide plate 298.

The link unit 210 (see Fig. 21) corresponds to the link unit 100 (see Fig. 6C) of Embodiment 1, and is configured by a lid side arm 212, a coil spring 215, a locking convex body 221, a shaft 227, a locking guide body 234, a body side arm 243, and a slide body 251.

The lid side arm 212 corresponds to the lid side arm 107 (see Fig. 6C) of Embodiment 1, where a shaft insertion hole 214 (see Fig. 21) is formed at one end of the arm bent to a substantially L-shape and a pivot attachment projection 211 is formed at the other end. The shaft insertion hole 214 is formed with an engagement strip 213 that engages a cut-out surface 226 of the shaft 227 so as to rotate with the inserted shaft 227.

The coil spring 215 is one type of an elastic body, and is partially or entirely housed in the concave part 225 (see Fig. 21 B) formed in the locking convex body 221.
The locking convex body 221 has a shaft insertion hole 223 formed at the center, and a perpendicular surface 222 formed at one part of the side wall of the shaft insertion hole 223. A locking projection 224 projecting in the axial direction is formed at one end face (face on the side contacting with the locking guide body 234) of the shaft insertion hole 223. A concave part 225 is formed at the other end of the shaft insertion hole 223.

The shaft 227 corresponds to the shaft member 109 (see Fig. 6C) of Embodiment 1, and is entirely formed to a rod form of substantially cylindrical shape with the cut-out surface 226 formed on one side and an inserting projection 228 formed at the other side.

The locking guide body 234 has a shaft insertion hole 233 formed at the center, where locking guides 231, 236 projecting in the axial direction along the vicinity of the circumference are arranged at one end face (face on the side contacting the locking convex body 221) of the shaft insertion hole 233. A concave part 238 is formed on the other end of the shaft insertion hole 233, and a cut-out part 239 is formed on one side part.

The body side arm 243 corresponds to the body side arm 103 (see Fig. 6C) of Embodiment 1, where the shaft insertion hole 241 is formed at one end of the arm having a substantially L-shape, and a pivot attachment projection 242 is formed at the other end.

The slide body 251 corresponds to the slide body 105 (see Fig. 6C) of Embodiment 1, and the entire shape is formed to a substantially solid rectangular shape, where linear guide grooves 252, 252 are arranged in parallel and in symmetric at the center of one surface and the opposite surface, and a shaft insertion hole 253 for inserting the shaft 227 is formed in a direction orthogonal to the guide groove 252.

The link unit 210 configured as above has an angle fixing function for fixing the open/close angle, which angle fixing function is realized with an angle fixing unit 240 configured by the coil spring 215, the locking convex body 221, and the locking guide body 234. That is, the locking convex body 221 is constantly biased towards the locking guide body 234 side by the biasing force of the coil spring 215, where the locking projection 224 rides over the locking guides 231, 236, slidably moves thereon and drops by the relative rotation of the locking convex body 221 and the locking guide body 234, and angle fixation is realized at the dropped position. While the locking projection 224 is riding over the locking guide 231, the angle is maintained by the biasing force of the coil spring 215 by freely stopping the rotation at an arbitrary angle.

The connection body 220 corresponds to the connection body 20 (see Fig. 4) of Embodiment 1, and is the same as the connection body 20 of Embodiment 1 other than that the guide 230 and the slide space 232 corresponding to the guide 30 and the slide space 32 of Embodiment 1 are arranged near the center of the connection body 220, and the locking concave part 23b, the circular arc inner peripheral surface 24b, and the locking concave part 25b of Embodiment 1 are omitted. The guide 230 is formed to a thin thickness compared to Embodiment 1, and is configured so that the guide grooves 252, 252 (see Fig. 21) contact the inner side of the guide 230, 230 and the slide body 251 slidably moves.
Other components are the same as Embodiment 1, and thus the same reference numerals are denoted for the same components and the description thereof will be omitted.

The opening/closing operation of the connection unit 205 executed when the connection body 220 advances/retreats with respect to the lid side connection unit 205a and the body side connection unit 205b, and the opening/closing operation of the mobile telephone 201 will now be described.

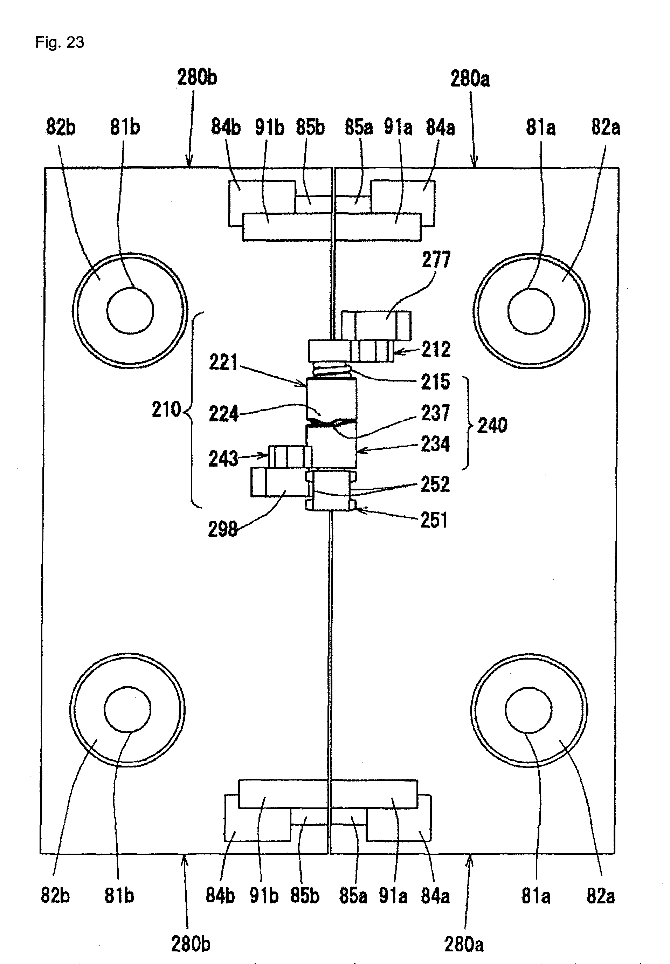

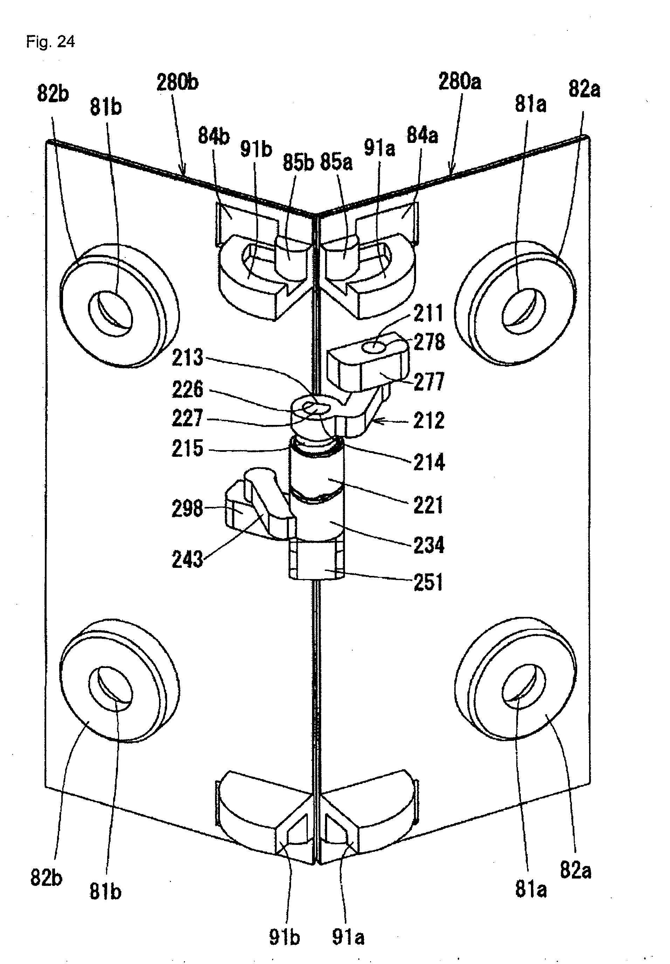

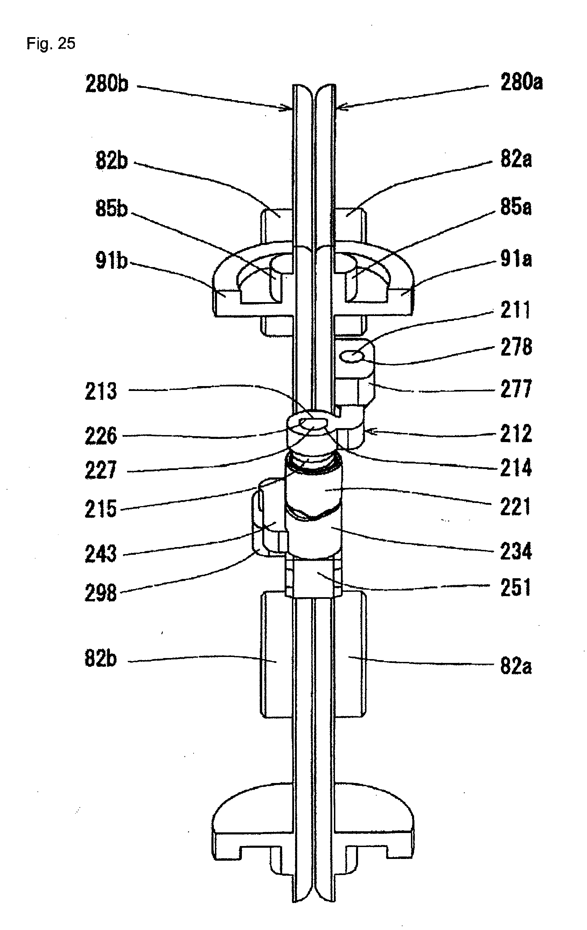

Fig. 23 is a bottom view of one part of the connection unit 205 in the open state, Fig. 24 is a perspective view of one part of the connection unit 205 slightly changed towards the closing direction from the open state, and Fig. 25 is a perspective view of one part of the connection unit 205 in the closed state. Fig. 23 to Fig. 25 are views seen from the lower right position in Fig. 20.

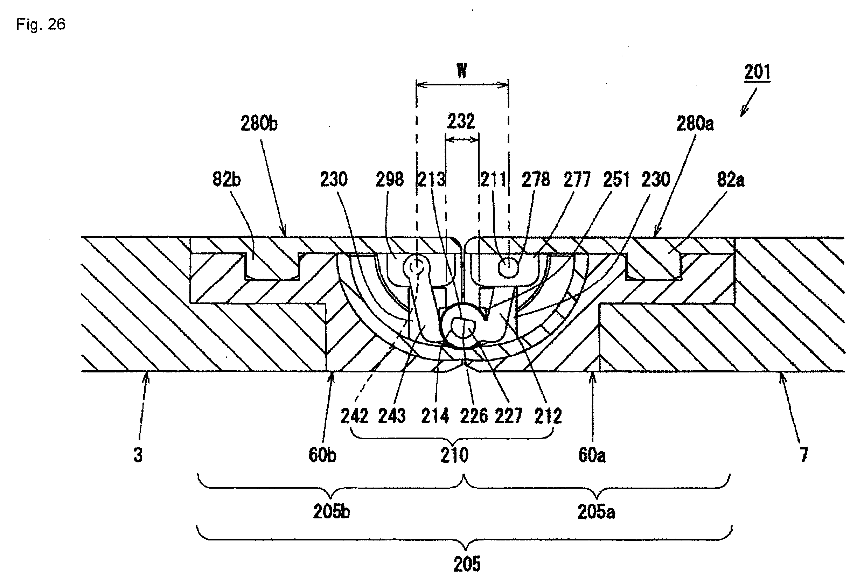

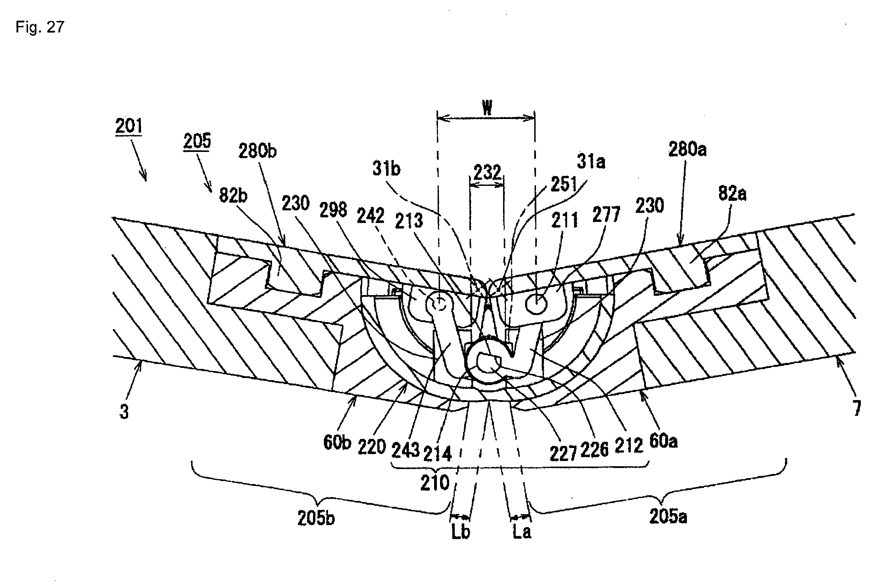

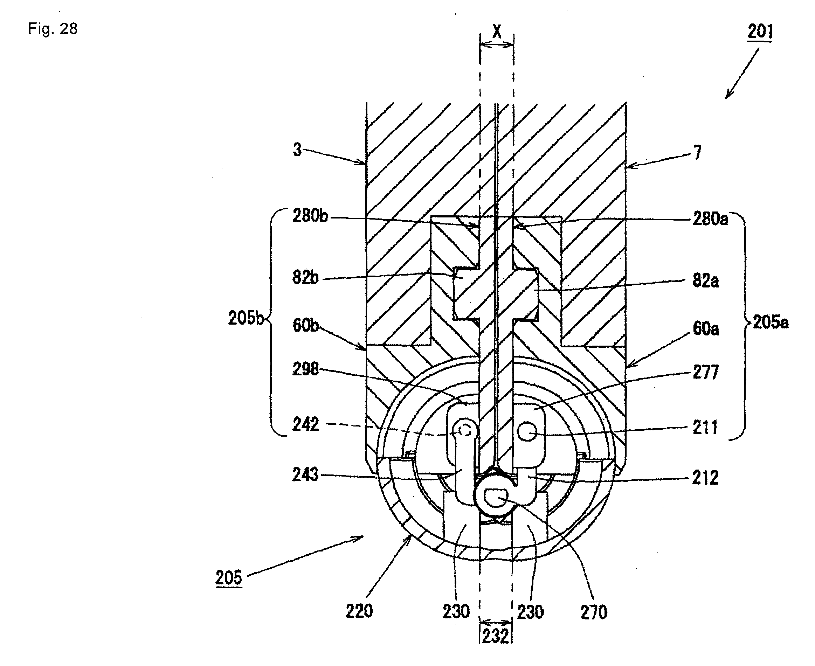

Fig. 26 is an enlarged cross sectional view of the connection unit 205 portion in the open state, Fig. 27 is an enlarged cross sectional view of the connection unit 205 portion slightly changed towards the closing direction from the open state, and Fig. 28 is an enlarged cross sectional view of the connection unit 205 portion in the closed state. Fig. 26 to Fig. 28 are cross sectional views taken along line B-B of Fig. 18.

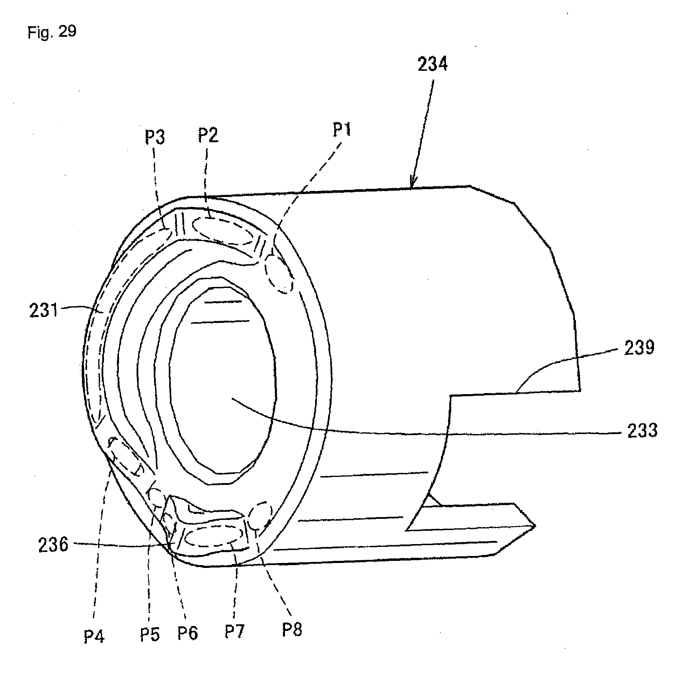

Fig. 29 is an enlarged perspective view of a locking guide body 234 arranged on the angle fixing unit 240 for enhancing the operation feeling of the opening/closing operation of the mobile telephone 201.
The open/closed state of the entire mobile telephone 201 corresponds to the explanatory view of Fig. 15 of Embodiment 1, and thus the description will be made using Fig. 15.

As shown in Fig. 23 and Fig. 26, in the open state, the lid 3 attached with the lid side connection unit 205a (see Fig. 26) and the body 7 attached with the body side connection unit 205b are in the state opened 180 degrees, and a rectangular solid shape is obtained as a whole, as shown in Fig. 15A of Embodiment 1.

The connection body 220 is completely housed in the concave part 62a (see Fig. 19) of the lid side connection unit 205a and the concave part 62b (reference numeral omitted in Fig. 19) of the body side connection unit 205b, and is not visible from the outside.
As shown in Fig. 26, the slide body 251 of the link unit 210 becomes closest to the base of the guide 230.

In this case, the state of the angle fixing unit 240 has the locking projection 224 of the locking convex body 221 positioned at position P8 (see Fig. 29) of the locking guide body 234. More specifically, the locking guide body 234 is formed with a locking guide 231 projecting to a constant height in a circular arc shape at a range of about forty percent along the circumference of the locking guide body 234 and having the end inclined, and a locking guide 236 of hill shape projecting to a height of about the same extent as the locking guide 231 with a slight interval from the locking guide 231. The position P8 is positioned adjacent to one end of the locking guide 236.

The locking convex body 221 is biased so as to push the locking guide body 234 by the biasing force of the coil spring 215 (see Fig. 21). Thus, even is the locking projection 224 rides on the locking guide body 234 and attempts to move to position P6 through position P7, it will not ride over with a slight force, and the lid side connection unit 205a and the body side connection unit 205b will not transition to the closed state. Therefore, the open state is stably maintained.

When the user manually applies force to fold the lid 3 and the body 7 to the closing direction from the above open state, the locking projection 224 rides over the locking guide 236 through position P7 and transitions to position P5 through position P6 at the point the relevant force exceeds the biasing force of the coil spring 215. As shown in Fig. 24 and Fig. 27, the lid 3 attached with the lid side connection unit 205a (see Fig. 26) and the body 7 attached with the body side connection unit 205b transition to a slightly bent state (e.g., about 170° or 160°).

Describing the operation feeling in this case, since position P7 is inclined, the state transitions to the closed state as if being taken in while the locking projection 224 is positioned at position P7, and the closed state is reliably maintained.
The locking projection 224 rides over the locking guide 236 through the position P7, so that the user feels a clicking feeling or a satisfactory operation feeling, and thereafter transitions to position P5 as if being taken in through position P6.

Thus, when transitioning in the closing direction, the lid side connection unit 205a turns with the slip-out prevention turning shaft 85a (see Fig. 24) as a virtual rotation axis, and the body side connection unit 205b turns with the slip-out prevention turning shaft 85b (see Fig. 24) as a virtual rotation axis. In this case, the pivot attachment projection 242 of the body side arm 243 and the pivot attachment projection 211 of the lid side arm 212 turn symmetrically in conjunction with the shaft 227 as the center.

According to such turn, the interval W between the pivot attachment projection 242 of the body side arm 243 and the pivot attachment projection 211 of the lid side arm 212 becomes wider than in the open state, as shown in Fig. 27. Thus, the slide body 251 of the link unit 210 slidably moves in a straight line from the base towards the distal end side of the guide 230 through the slide space 232 of the guide 230. Therefore, the ratio between the advance/retreat distance La (see Fig. 27) the connection body 220 advances from the lid side connection unit 205a and the advance/retreat distance Lb (see Fig. 27) the connection body 220 advances from the body side connection unit 205b becomes one to one, and thus equally advances. A stable and smooth operation feeling is thereby obtained.

When folding operated further in the closing direction, the locking projection 224 passes position P4 and rides over the locking guide 231 to transition to position P3, and the lid 3 and the body 7 transition to a further bent state. In the middle of transitioning, the interval W becomes a maximum when the virtual turning axis 31 a (see Fig. 27) of the lid side connection unit 205a and the virtual turning axis 31 b of the body side connection unit 205b are positioned on a line connecting the pivot attachment projection 242 of the body side arm 243 and the pivot attachment projection 211 of the lid side arm 212, and thereafter, the interval W becomes smaller. Meanwhile, the slide body 251 of the link unit 210 continues to move from the base towards the distal end of the guide 230 in the slide space 232 of the guide 230. The ratio of the advanced amount of the connection body 220 from the lid side unit 205a and the advanced amount of the connection body 220 from the body side unit 205b is maintained to a one to one, and thus is always equally advanced.

The position P3 is on a plane orthogonal to a direction the coil spring 215 biases, and is at a projecting position. Thus, the frictional force increase since the biasing force of the coil spring 215 is strongly applied while the locking projection 224 is positioned at position P3. As a result, a so-called free stop in which the open/close angle of the lid 3 and the body 7 is maintained regardless of which position the locking projection 224 is arranged in the position P3 is realized.

When further folding operated in the closing direction, the locking projection 224 transitions to position P1 through position P2, and a completely folded closed state is obtained, as shown in Fig. 25 and Fig. 28. As shown in Fig. 28, the slide body 251 of the link unit 210 is positioned in the slide space 232 at a position closest to the distal end of the guide 230.

The body side arm 243 and the lid side arm 212 are bent and formed so that the side surfaces on the opposing sides thereof become concave. Thus, a gap X is ensured between the body side arm 243 and the lid side arm 212, and the lid side guide cover 280a and the body side guide cover 280b are held in the gap X.
When transitioning from the closed state to the open state, operation completely opposite to that in transitioning towards the closing direction is performed.

According to such an operation, the connection body 220 advances/retreats drawing a circular arc with respect to the lid side unit 205a and the body side unit 205b. A mobile telephone 201 of a novel configuration in which the lid 3 and the body 7 open/close can be provided.

In opening/closing, the connection body 220 equally advances/retreats with respect to the lid side unit 205a and the body side unit 205b by the function of the link unit 210, and a stable operation symmetric at the center of the folding can be performed.

The connection body 220 slidably turns and advances/retreats with the circular arc outer peripheral surface 29a (see Fig. 20) contacting the circular arc face 66a of the lid side guide body 60a (see Fig. 19), and thus advances/retreats without being caught. In particular, when the slide stabilizing guide 91 a (see Fig. 19) arranged on the lid side guide cover 280a and the stabilizing groove 34a (see Fig. 22) arranged on the connection body 220 engage, a more stable slide turn can be realized, and a smooth advancement/retreatment can be reliably realized.

The concave part 62a and 62b are arranged in the connection part of the lid 3 and the connection part of the body 7, respectively, where one end side of the connection body 220 is attached to advance into and retreat from the concave part 62a, and the other end side of the connection body 220 is attached to advance into and retreat from the concave part 62b. Therefore, in the fully open state, the connection body 220 can be housed in the concave parts 62a, 62b and be hidden, whereby the appearance of the mobile telephone 201 improves.

The connection body 220 can be advanced/retreated in a circular arc form from the concave part 62 (62a, 62b) by arranging the advance/retreat guide 68 (68a, 68b) for advancing/retreating the connection body 220 while drawing a circular arc with the slip-out prevention turning shaft 85 (85a, 85b) as a virtual axis core in the lid side unit 205a and body side unit 205b, and arranging the side wall 28 and the circular outer peripheral surface 29 (29a, 29b) on the connection body 220. In the open state, the connection body 220 is housed in the concave part 62, and in transitioning from the open state to the closed state, the connection body 220 advances in a circular arc form from the concave part 62 thereby allowing the lid 3 and the body 7 to be in the closed state.

The advance/retreat guide 68 is formed with different circular arc axes with the axis of the circular arc face 66a on the lid 3 side as the lid turning axis 31 a (see Fig. 27) and the axis of the circular arc face 66b on the body 7 side as the body turning axis 31 b, whereby a moderate opening/closing operation can be realized in the fully closed state, the fully opened state, and the state in between.

The lid 3 and the body 7 can be stabilized at a constant angle of 0°, 170° (or 160° etc.) and 180° by arranging the angle fixing unit 240 for locking the advancement/retreatment of the connection body 220 with respect to the concave part 62 when the open/close angle of the lid 3 and the body 7 becomes a constant angle, and the operability of the user improves. The locking open/close angle is not limited thereto, and the locking guides 231, 236 may be formed to lock the advancement/retreatment at other angles, or the locking guides 231, 236 may be formed while setting two or four or more angles for locking advancement/retreatment.

Furthermore, from the fully opened state to the closed state (up to right before the fully closed state), the connection body 220 can be prevented from slipping out from the lid side unit 205a and the body side unit 205b since the slip-out prevention turning shafts 85a, 85b are contacting the shaft contacting grooves 21 a, 21 b. In the fully closed state, the connection body 220 can be prevented from slipping out from the lid side unit 205a and body side unit 205b since the slip-out preventing projections 22a, 22b are contacting the locking sides 64a, 64b.

Compared to a case of adopting the pushing unit 40 of Embodiment 1, the space on the inner side of the connection body 220 can be widely ensured by adopting the angle fixing unit 240, whereby the degree of freedom in housing the connection cable for electrically connecting the electronic equipment in the lid 3 and the electronic equipment in the body 7 is enhanced.

The circular arc face 66a is provided to slidably advance/retreat the connection body 220 in a circular arc form, and thus is not limited to being configured with a plane, and may be formed to other shapes by arranging a plurality of circular arc shaped rails in the width direction. Furthermore, the two wall faces 67a are provided so that the connection body 220 does not rattle while sliding, and thus are not limited to perpendicular faces, and may be formed to other shapes.

The slip-out preventing projection groove 65a and the locking side 64a are provided to prevent the connection body 220 from slipping out from the lid-side unit 205a, and thus are not limited to such shape and may be formed to other shapes and may be formed at one part of the circular arc surface 66a. For instance, one part of the circular arc face 66a may be formed to a concave shape in a circular arc form up to right in front of the connection end face 61 a along the advancing/retreating direction to serve as the slip-out preventing projection groove 65a and the locking side 64a may be arranged on the connection end face 61 a side of the slip-out preventing projection groove 65a. In this case, the slip-out preventing projection 22a of the connection body 220 is preferably arranged on the upper side end at the front surface of the connection body 220.

In the fully open state, a configuration of hiding the connection body 220 so as to be completely invisible is adopted, but a hole or a groove may be formed on the connection side of the lid side guide cover 280a and the body side guide cover 280b, so that the connection body 220 is partially visible even in the fully open state. In this case as well, a hinge will not project out and be seen as in the prior art, and a mobile telephone 201 of a smart design can be provided.

### Embodiment 4

Embodiment 4 will now be described.

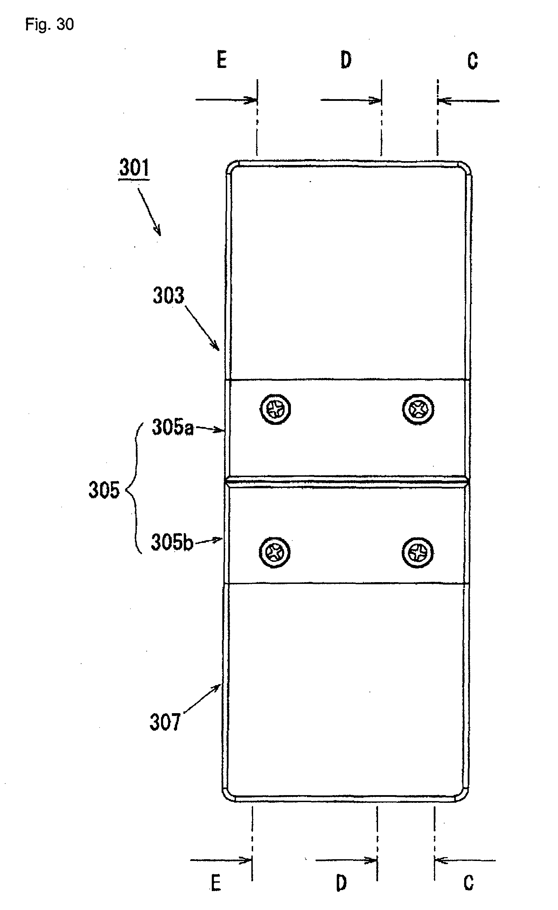

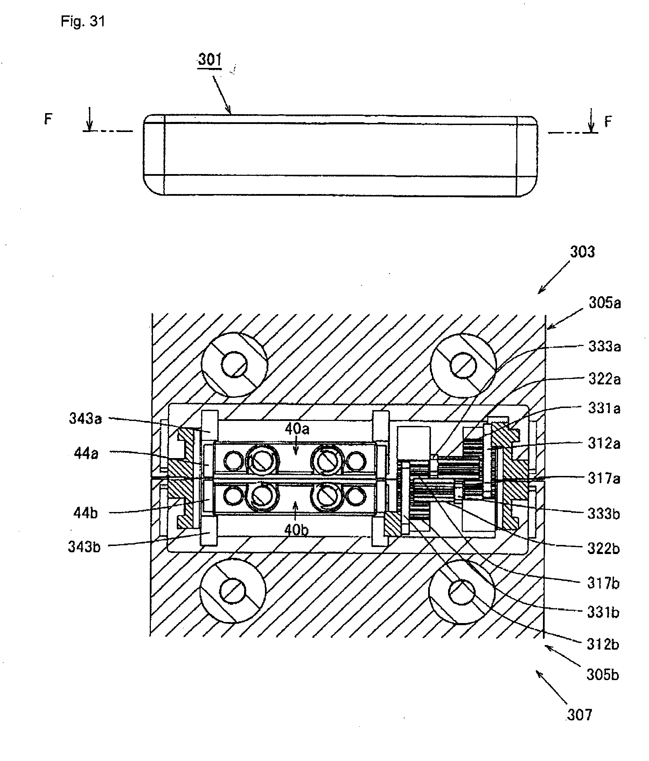

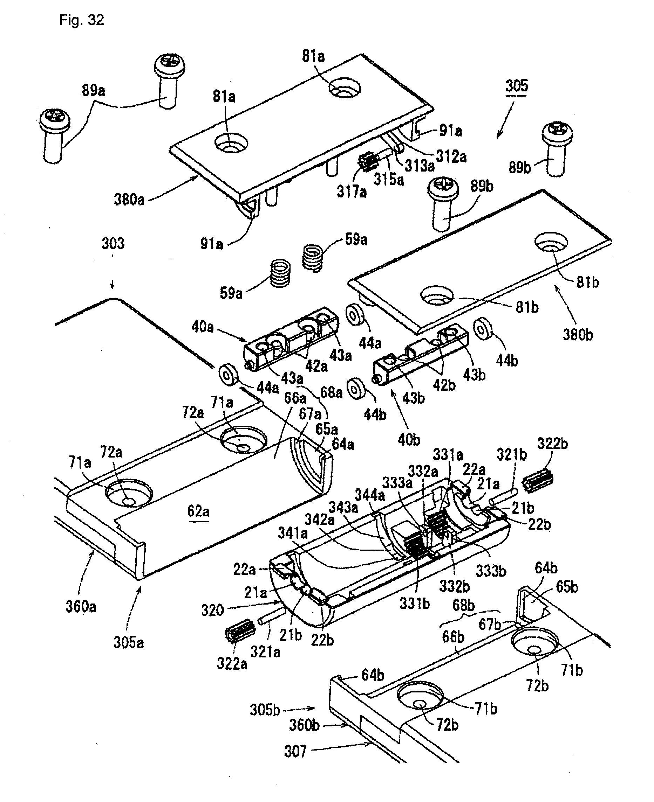

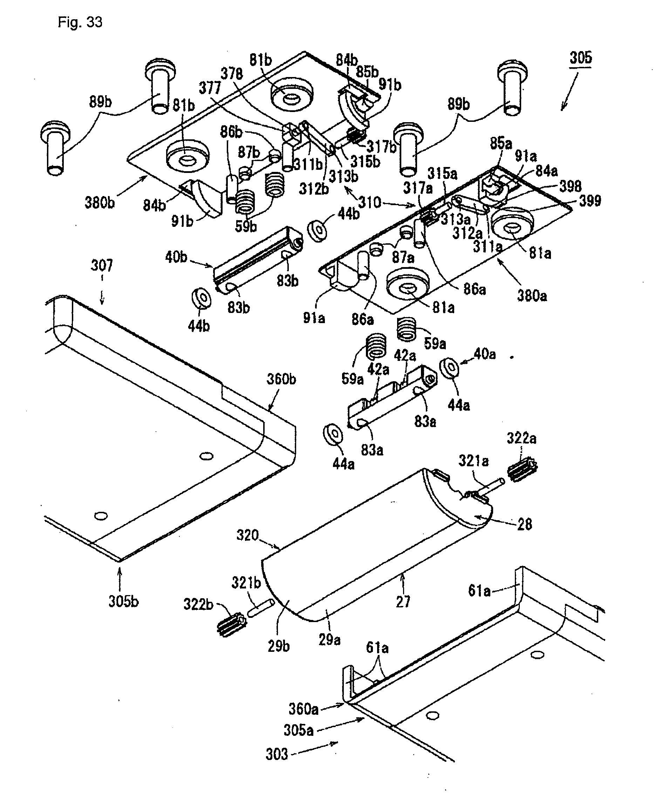

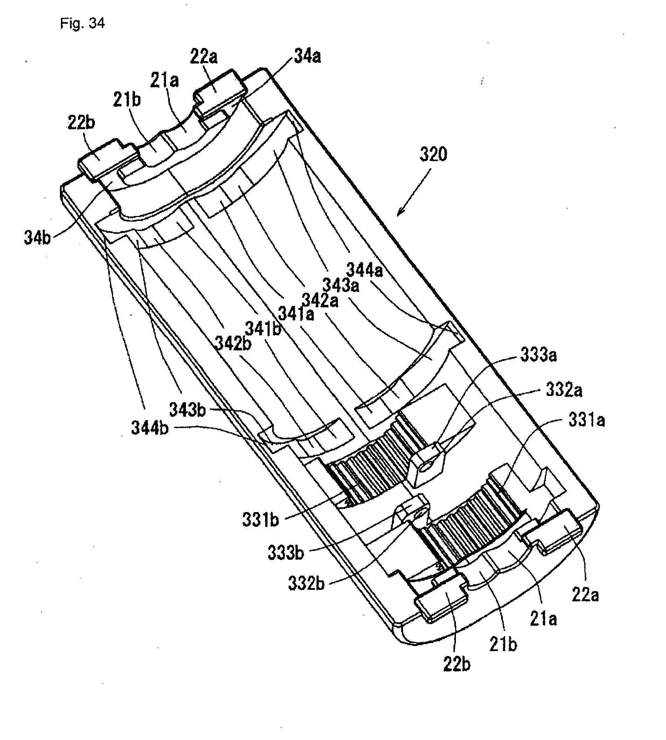

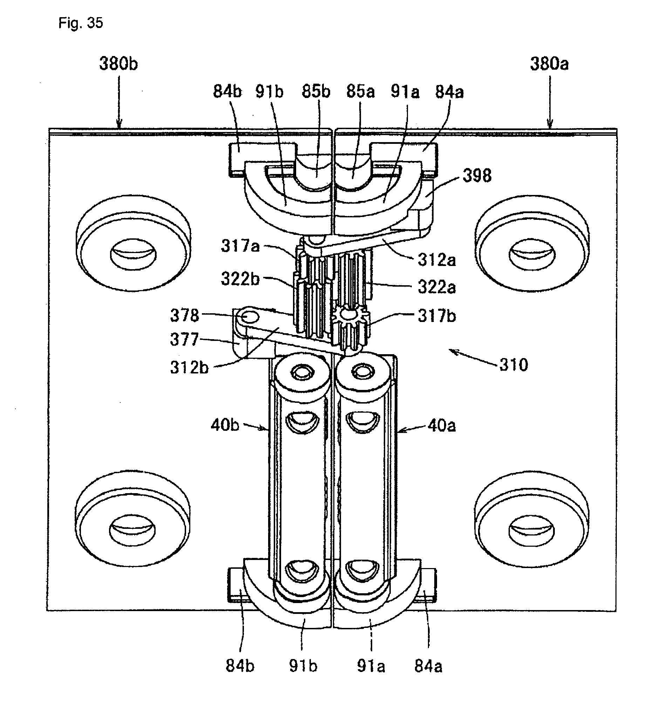

Fig. 30 is a plan view of a mobile telephone 301 of Embodiment 4, Fig. 31A is a front view of the mobile telephone 301, Fig. 31B is a plan enlarged cross sectional view of the inside of a connection unit 305, Fig. 32 is an exploded perspective view of a connection unit 305 seen from diagonally above, Fig. 33 is an exploded perspective view of the connection unit 305 seen from diagonally below, Fig. 34 is a perspective view of a connection body 320, and Fig. 35 is a perspective view of one part of the connection unit 305 in the open state seen from below.

The mobile telephone 301 includes a lid 303 similar to the lid 3 of the mobile telephone 1 of Embodiment 1 and a body 307 similar to the body 7 of the mobile telephone 1 of Embodiment 1. A lid side unit 305a corresponding to the lid side unit 5a (see Fig. 2) of Embodiment 1 is arranged in the lid 303. A body side unit 305b corresponding to a body side unit 5b (see Fig. 2) of Embodiment 1 is arranged in the body 307.

A connection body 320 (see Fig. 33) and a link unit 310 (see Fig. 33) are housed in a connection part of the lid side unit 305a and the body side unit 305b in the open state. The link unit 310, the connection body 320, the lid side unit 305a and the body side unit 305b configure a connection unit 305.

The lid side unit 305a is configured by a lid side guide cover 380a and a lid side guide body 360a, and the body side unit 305b is configured by a body side guide cover 380b and a body side guide body 360b.

The lid side guide cover 380a is the same as the lid side guide cover 380a of Embodiment 1 other than that a link pivot attachment part 398 is arranged in place of the link pivot attachment part 77 (see Fig. 5) of Embodiment 1. The body side guide cover 380b is the same as the body side guide cover 380b of Embodiment 1 other than that a guide plate 377 is arranged in place of the guide plate 98 of Embodiment 1.

A pivot attachment projection 399 projecting towards the inner side in the width direction of the mobile telephone 301 is arranged on the link pivot attachment part 398, and a pivot attachment projection 378 projecting towards the inner side in the width direction of the mobile telephone 301 is arranged on the guide plate 377.

The link unit 310 is configured by the lid side link unit of the lid side unit 305a side and a body side link unit of the body side unit 305b. As shown in Fig. 35, the lid side link unit is configured by a lid side arm 312a having one end axially supported at the pivot attachment projection 399 of the link pivot attachment part 398, a rolling gear 317a axially supported in parallel to a pivot axis of the pivot attachment projection 399 at the other end of the lid side arm 312a, a center gear 322a gearing with the rolling gear 317a and having a parallel rotation axis, and a peripheral surface gear 331 a (see Fig. 34) having the teeth lined in a circular arc shape with the rotation axis of the center gear 322a as the center and being formed on the inner surface of the connection body 320.

The body side link unit is configured symmetric to the lid side link unit and is configured by a body side arm 312b having one end axially supported at the pivot attachment projection 378 of the link pivot attachment part 377, a rolling gear 317b axially supported in parallel to a pivot axis of the pivot attachment projection 378 at the other end of the body side arm 312b, a center gear 322b gearing with the rolling gear 317b and having a parallel rotation axis, and a peripheral surface gear 331 b having the teeth lined in a circular arc shape with the rotation axis of the center gear 322b as the center and being formed on the inner surface of the connection body 320 (see Fig. 34). The lid side arm 312a and the body side arm 312b are supported in a rolling manner so that the rolling gear 317a and the rolling gear 317b can roll while gearing with the peripheral surface gear 331 a and the peripheral surface gear 331 b, respectively.

As shown in Fig. 34, the peripheral surface gear 331 a and the peripheral surface gear 331 b having the teeth of the gear arranged in a circular arc shape are arranged parallel in the left and right direction with different center axes and with a constant interval at the inner surface of the connection body 320.

A bearing 333a having a shaft hole 332a formed on the extended line of the center axis of the peripheral surface gear 331 a and a bearing 333b having a shaft hole 332b formed on the extended line of the center axis of the peripheral surface gear 331 b are arranged upright between the peripheral surface gear 331 a and the peripheral surface gear 331 b at the bottom on the inner side of the connection body 320. A shaft body 321 a (see Fig. 32) is inserted to the shaft hole 332a of the bearing 333a to rotatably bear the center gear 322a, and a shaft body 321 b is inserted to the shaft hole 332b of the bearing 333b to rotatably bear the center gear 322b.

Furthermore, on the inner side of the connection body 320, locking concave parts 341 a, 342a, a rolling rail 343a, and a locking concave part 344a are arranged in this order from the inner side to the outer side as a guide rail on which the roller 44a of the lid side pushing unit 40a rolls.

In symmetric thereto, locking concave parts 341 b, 342b, a rolling rail 343b, and a locking concave part 344b are arranged in this order from the inner side to the outer side as a guide rail on which the roller 44b of the lid side pushing unit 40b rolls.

Other components are the same as Embodiment 1, and the same reference numerals are denoted for the same components and the detailed description thereof will be omitted.

An opening/closing operation of the connection unit 305 executed by advancing/retreating the connection body 320 with respect to the lid side unit 305a and the body side unit 305b, and an opening/closing operation of the mobile telephone 301 will be described below.

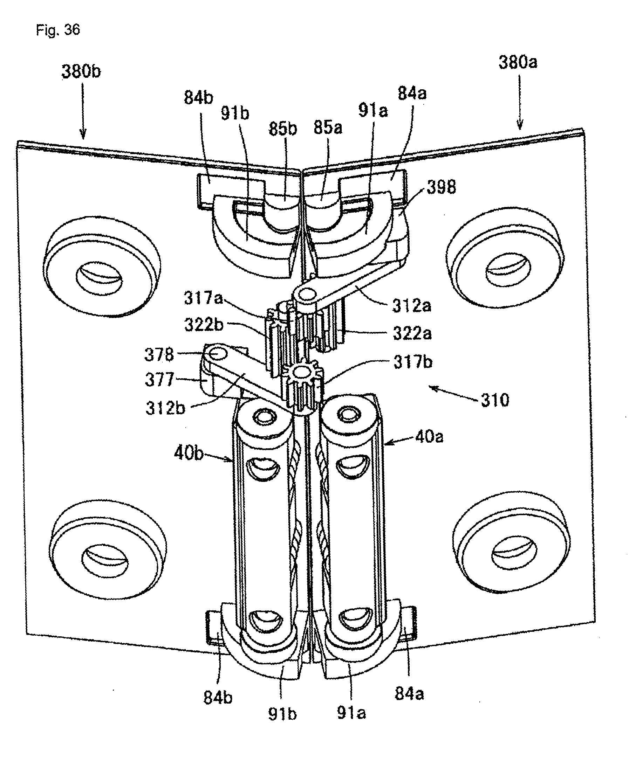

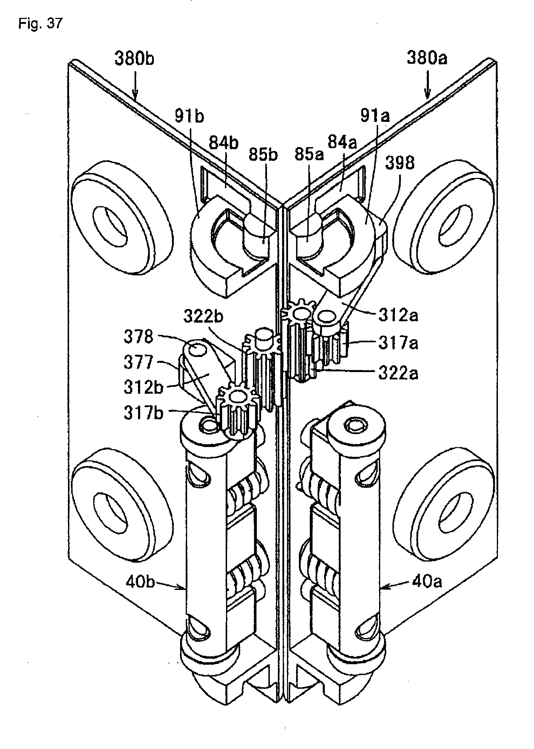

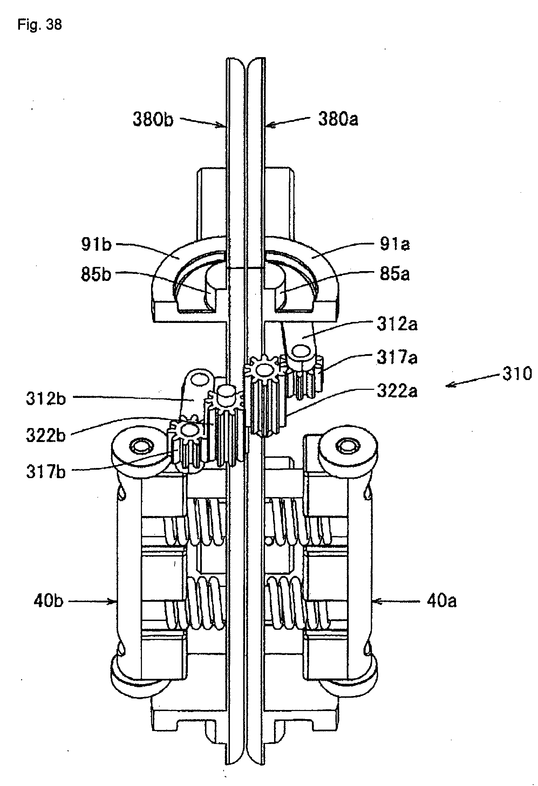

Fig. 35 is a perspective view of one part of the connection unit 305 in the open state, Fig. 36 is a perspective view of one part of the connection unit 305 slightly changed towards the closing direction from the open state, Fig. 37 is a perspective view of one part of the connection unit 305 further changed in the closing direction, and Fig. 38 is a perspective view of one part of the connection unit 305 in the closed state. Fig. 35 to Fig. 38 are views seen from the lower right position in Fig. 33.

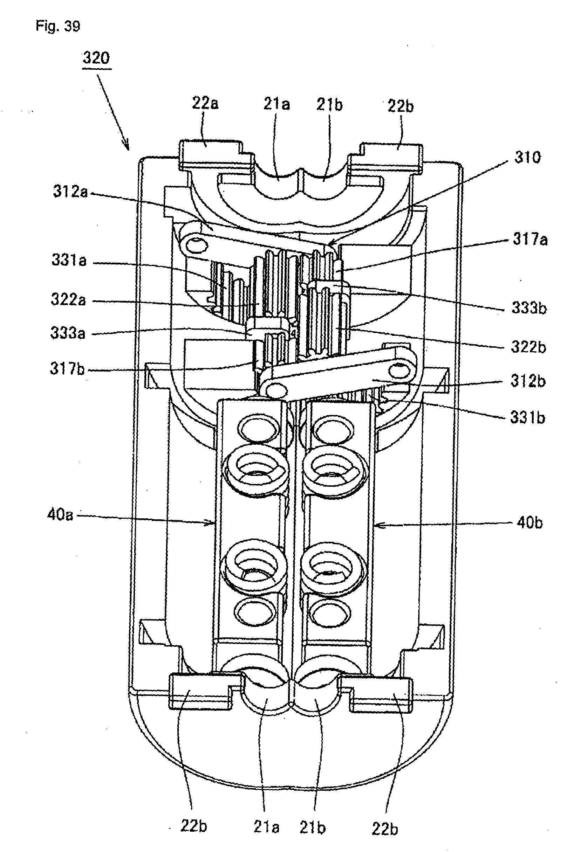

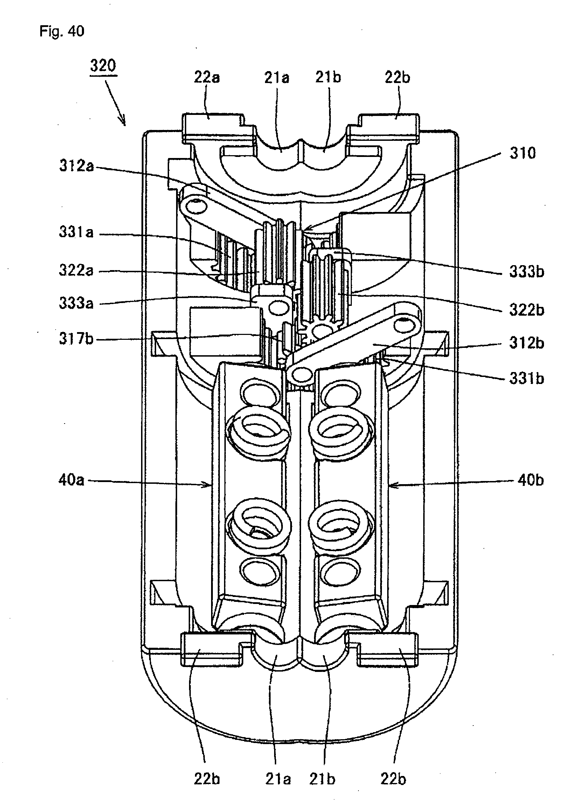

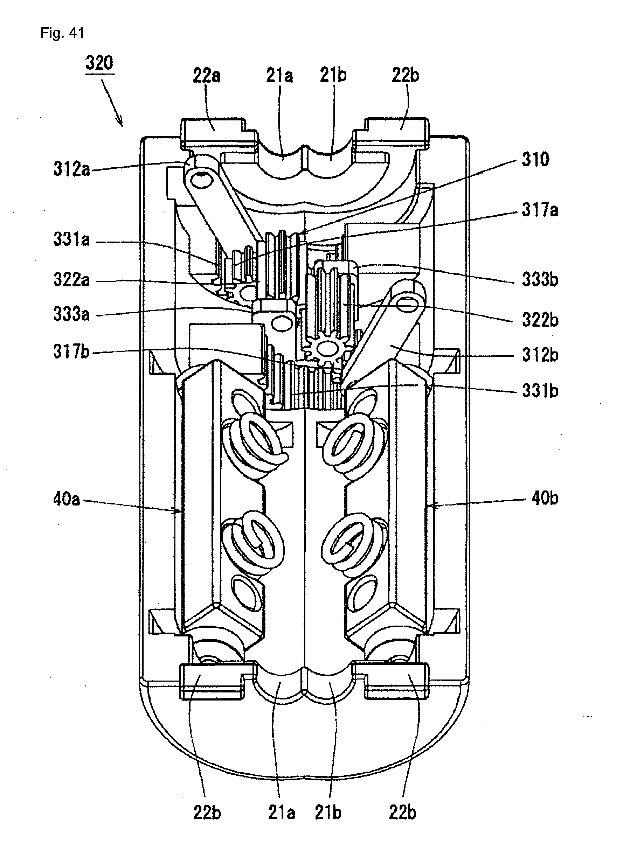

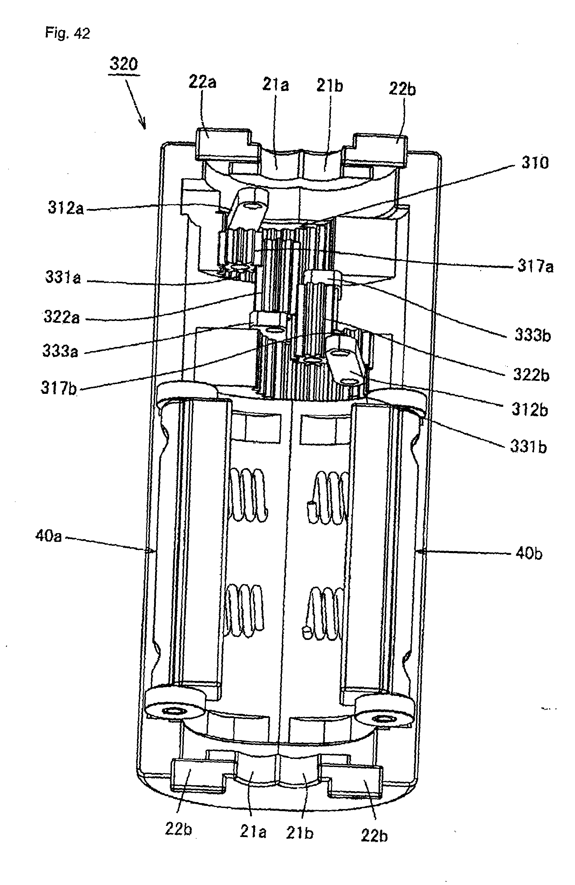

Fig. 39 is a perspective view of the link unit 310 and the pushing unit 40 (40a, 40b) in the open state, Fig. 40 is a perspective view of the link unit 310 and the pushing unit 40 slightly changed towards the closing direction from the open state, Fig. 41 is a perspective view of the link unit 310 and the pushing unit 40 further changed in the closing direction, and Fig. 42 is a perspective view of the link unit 310 and the pushing unit 40 in the closed state.

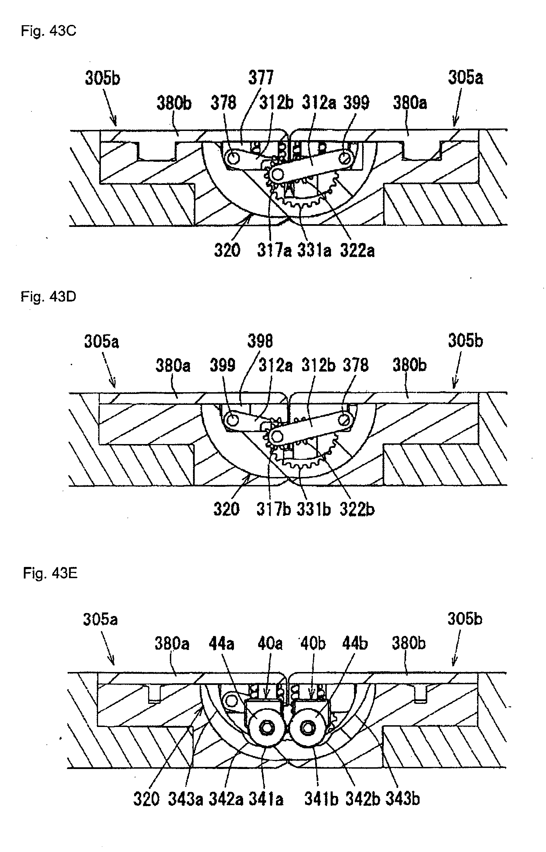

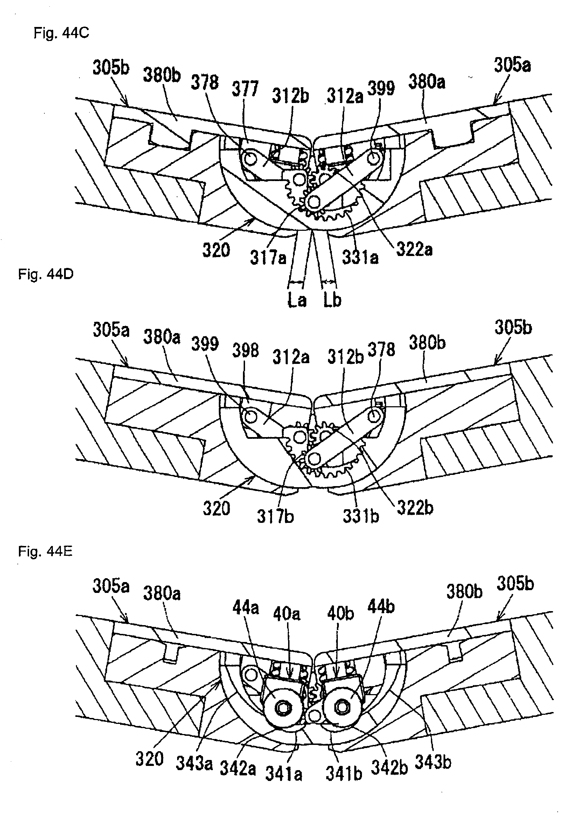

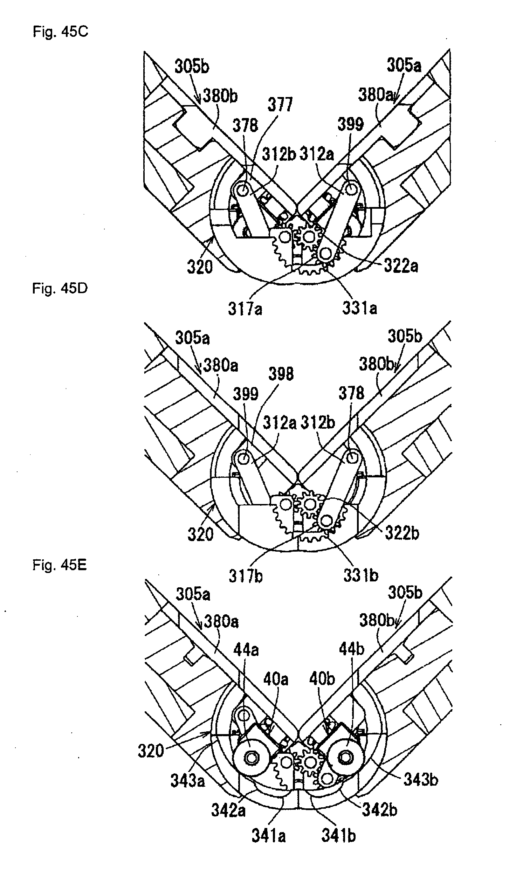

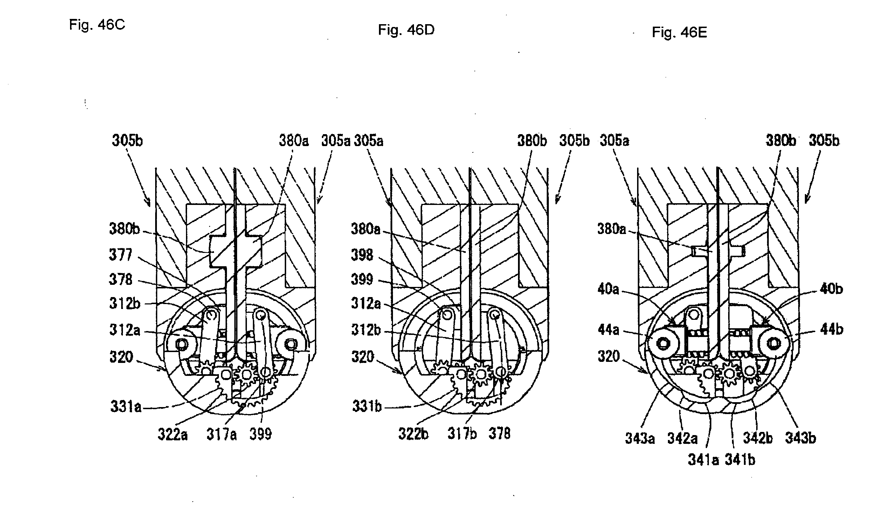

Fig. 43 is an explanatory view of the connection unit 305 portion in the open state in an enlarged cross section, Fig. 44 is an explanatory view of the connection unit 305 portion slightly changed towards the closing direction from the open state in an enlarged cross section, Fig. 45 is an explanatory view of the connection unit 305 portion further changed in the closing direction in an enlarged cross section, and Fig. 46 is an explanatory view of the connection unit 305 portion in the closed state in an enlarged cross section. In Fig. 43 to Fig. 46(C) , shows a cross sectional view taken along a line C-C in Fig. 30(D) , shows a cross sectional view taken along a line D-D in Fig. 30, and (E) shows a cross sectional view taken along line E-E in Fig. 30.

First, in the open state, as shown in Fig. 35 and Fig. 43, the lid 303 arranged with the lid side unit 305a (see Fig. 43) and the body 307 arranged with the body side unit 305b are in a state opened 180 degrees, and one rectangular solid shape as a whole is obtained as shown in Fig. 15A in Embodiment 1.
(D) and (E) in the figure are cross sectional views seen from the side opposite to (C), and are shown with the left and the right sides reversed.

The connection body 320 is completely housed in the concave part 62a (see Fig. 32) of the lid side unit 305a and the concave part 62b of the body side unit 305b, and is not visible from the outside. As shown in Fig. 43C, the lid side arm 312a of the connection unit 305 is in a state closest to the horizontal state, where the rolling gear 317a axially supported at the distal end is positioned near the end on the body side unit 305b side of the peripheral surface gear 331 a on the side opposite to the axial center of the peripheral surface gear 331 a when seen from the pivot attachment projection 399 axially supporting the lid side arm 312a.

Similarly, as shown in Fig. 43D, the body side arm 312b is in a state closest to the horizontal state, where the rolling gear 317b axially supported at the distal end is positioned near the end on the lid side unit 305a side of the peripheral surface gear 331 b on the side opposite to the axial center of the peripheral surface gear 331 b when seen from the pivot attachment projection 378 axially supporting the lid side arm 312b.
In this case, the lid side arm 312a and the body side arm 312b cross in side view.

As shown in Fig. 43E, the roller 44 (44a, 44b) of the pushing unit 40 (40a, 40b) contacts the locking concave part 341 (341 a, 341 b) (see Fig. 34) of the connection body 320. Therefore, the lid side unit 305a and the body side unit 305b transition to the closed state with a small force by the biasing force of the coil spring 59 (59a, 59b), and can be maintained in the open state.

When the user manually applies force so that the lid 303 and the body 307 is folding operated from the open state in the closing direction, the roller 44 moves out from the locking concave part 341 at the point the relevant force exceeds the biasing force of the coil spring 59. The lid 303 attached with the lid side unit 305a and the body 307 attached with the body side unit 305b transition to a slightly bent state, as shown in Fig. 36, Fig. 40, and Fig. 44. When the roller 44 moves out from the locking concave part 341, the user feels a clicking feeling or a satisfactory operation feeling.

In transitioning towards the closing direction, the lid side unit 305a turns with the slip-out prevention turning shaft 85a (see Fig. 36) as the virtual rotation axis, and the body side unit 305b turns with the slip-out prevention turning shaft 85b (see Fig. 36) as the virtual rotation axis.

As shown in Fig. 44C, the rolling gear 317a rolls on the peripheral surface gear 331 a while gearing with the gear of the peripherals surface gear 331 a, and moves towards the lid side unit 305a. The rolling gear 317a rotates the center gear 322a during such movement.

In symmetric thereto, the rolling gear 317b rolls on the peripheral surface gear 331 b while gearing with the gear of the peripheral surface gear 331 b, and moves towards the body side unit 305b, as shown in Fig. 44D. The rolling gear 317b rotates the center gear 322b during such movement,.

The center gear 322a and the center gear 322b gear with each other, and reverse operate by the same rotation amount. Therefore, the lid side arm 312a and the body side arm 312b constantly has the same rotation amount and symmetrically rotate, where the ratio between the advance/retreat distance La (see Fig. 44) the connection body 320 advances from the lid side unit 305a and the advance/distance Lb (see Fig. 44) the connection body 320 advances from the body side unit 305b becomes one to one, and advances from thus equally advances. A stable and smooth operation feeling is thereby obtained.

At the angle moved in such slightly closed state, the roller 44 of the pushing unit 40 each contacts the locking concave part 342 and is rotation locked, as shown in Fig. 44E. Therefore, the open/close angle of the mobile telephone 301 stabilizes once at an angle of 170° and 160°.

When folding operated further in the closing direction, the state transitions to a bent state as shown in Fig. 37, Fig. 41, and Fig. 45. During such transition as well, the ratio of the amount the connection body 320 advances from the lid side unit 305a and the amount the connection body 320 advances from the body side unit 305b is maintained at a ratio of one to one, and always equally advances.

In this case, as shown in Fig. 45E, the roller 44 of the pushing unit 40 constantly strongly receives the biasing force of the coil spring 59 (59a, 59b) as it rides on the rolling rail 343. The rolling rail 343 is formed such that the radius to the rolling rail 343 having the slip-out prevention turning shaft 85a, 85b or the center of rotation as the center extends towards each end on the lid 303 side and the body 307 side from the center of the connection body 320. Thus, the roller 44 smoothly rolls in the closing direction by the biasing force of the coil spring 59, and naturally transitions towards the closing direction as if being taken in.

When naturally transitioned in the closing direction or further folding operated in the closing direction, the state transitions to a completely folded closed state, as shown in Fig. 38, Fig. 42, and Fig. 46. In this case, as shown in Fig. 46, the rolling gear 317a is positioned on the opposite side in the open state, that is, near the end on the lid side connection unit 305a side at the peripheral surface gear 331a. The rolling gear 317b is positioned on the opposite side in the open state, that is, near the end on the body side connection unit 305b side at the peripheral surface gear 331 b.

Therefore, as shown in Fig. 46C, the line connecting the axis center of the shaft hole 332a (axis center of the center gear 322a), the axis center of the rolling gear 317a, and the axis center of the pivot attachment projection 399 has a substantially L shape. Furthermore, as shown in Fig. 46D, a line connecting the axis center of the shaft hole 332b, the axis center of the rolling gear 317b, and the axis center of the pivot attachment projection 378 has a substantially L shape symmetric to the above substantially L shape. In this case, the lid side arm 312a and the body side arm 312b are in a state close to a parallel state without crossing in side view. The roller 44 of the pushing unit 40 contacts the locking concave part 344 and is locked, and a fully closed state is maintained by the biasing force of the coil spring 59.

Accordingly, an appropriate space is ensured between the lid side arm 312a and the body side arm 312b, so that the thickness of the lid side guide cover 380a and the thickness of the body side guide cover 380b are housed within the width of the space, and the state transitions to the fully closed state.
When transitioning from the closed state to the open state, the operation completely the opposite of that in transitioning in the closing direction is performed.

According to the above configuration, the connection body 320 advances/retreats drawing a circular arc with respect to the and the lid side unit 305a and the body side unit 305b, and a mobile telephone 301 having a novel configuration in which the lid 303 and the body 307 open/close is provided.

In opening/closing, the connection unit 320 equally advances/retreats with respect to the lid side unit 305a and the body side unit 305b by the function of the link unit 310, and a stable operation symmetric at the center of folding can be performed.

The connection body 320 slidably turns and advances/retreats with the circular arc outer peripheral surface 29a (see fig. 33) contacting the circular arc face 66a of the lid side guide body 360a (see Fig. 32), and thus can advances/retreats without being caught. In particular, when the slide stabilizing guide 91 a (see Fig. 32) arranged on the lid side guide cover 380a and the stabilizing groove 34a (see Fig. 34) arranged on the connection body 320 engage, a more stable slide turn can be realized, and a smooth advancement/retreatment can be reliably realized.

The concave part 62a are 62b are arranged in the connection part of the lid 303 and the connection part of the body 307, respectively, where one end of the connection body 320 is attached in an advance into and retreat from in the concave part 62a, and the other end of the connection body 320 is attached to advance into and retreat from the concave part 62b. Therefore, in the fully open state, the connection body 320 can be housed in the concave parts 62a, 62b and be hidden, whereby the appearance of the mobile telephone 301 improves.

The connection body 320 can be advanced/retreated in a circular arc form from the concave part 62 (62a, 62b) by arranging the advance/retreat guide 68 (68a, 68b) for advancing/retreating the connection body 320 while drawing a circular arc with the slip-out prevention turning shaft 85 (85a, 85b) as a virtual axis core at the lid side unit 305a and the body side unit 305b, and arranging the side wall 28 and the circular outer peripheral surface 29 (29a, 29b) on the connection body 320. In the open state, the connection body e20 is housed in the concave part 62, and in transitioning from the open state to the closed state, the connection body 320 advances in a circular arc form from the concave part 62 thereby allowing the lid 303 and the body 307 to be in the closed state.

Similar to Embodiment 1, the advance/retreat guide 68 is formed with different circular arc axes with the axis of the circular arc face 66a on the lid 303 side as the lid turning axis 31 a (see Fig. 4 of Embodiment 1) and the axis of the circular arc face 66b on the body 307 side as the body turning axis 31 b (see Fig. 4 of Embodiment 1), whereby a moderate opening/closing operation can be realized in the fully closed state, the fully opened state, and the state in between.

The locking concave part 341 (341 a, 341 b), 342 (342a, 342b), 344 (344a, 344b), and the pushing unit 40 (40a, 40b) for locking the advancement/retreatment of the connection body 320 with respect to the concave part 62 when the open/close angle of the lid 303 and the body 307 becomes a constant angle are arranged. The open/close angle of the lid 303 and the body 307 can then be stabilized at a constant angle of 0°, 170° (or 160°), and 180°, and the operability for the user improves. The locking open/close angle is not limited thereto, and the locking concave parts 341, 342, 344 may be formed to lock the advancement/retreatment at other angles, or the locking concave parts 341, 342, 344 may be formed while setting two or four or more angles for locking advancement/retreatment.

The force for stabilizing the lid 303 and the body 307 at a constant angle can be easily adjusted by the biasing force of the coil spring 59 by using the coil spring 59 (59a, 59b) for applying the biasing force to the pushing unit 40, and the open/close mechanism having satisfactory clicking feeling can be easily provided.

Furthermore, from the fully open state to the closed state (right before fully closed state), the connection body 320 can be prevented from slipping out from the lid side unit 305a and the body side unit 305b since the slip-out prevention turning shaft 85a, 85b are contacting the shaft contacting groove 21 a, 21 b. In the fully closed state, the connection body 320 can be prevented from slipping out from the lid side unit 305a and the body side unit 305b since the slip-out preventing projections 22a, 22b are contacting the locking sides 64a, 64b.

The pushing unit for positioning the open/close position includes the lid side pushing unit 40a and the body side pushing unit 40b, but may only include either one. In this case as well, a satisfactory operation feeling for symmetrically opening/closing is obtained by the link unit 310.

The circular arc face 66a is provided to slidably advance/retreat the connection body 320 in a circular arc form, and thus is not limited to being configured with a plane, and may be formed to other shapes by arranging a plurality of circular arc shaped rails in the width direction. The two wall faces 67a are provided so that the connection body 320 does not rattle while sliding, and thus are not limited to perpendicular faces, and may be formed to other shapes.

The slip-out preventing projection groove 65a and the locking side 64a are provided to prevent the connection body 320 from slipping out from the lid-side unit 305a, and thus are not limited to such shape and may be formed to other shapes, and furthermore, may be formed at one part of the circular arc face 66a. For instance, one part of the circular arc face 66a may be formed to a concave shape in a circular arc form up to right in front of the connection end face 61 a along the advancing/retreating direction to serve as the slip-out preventing projection groove 65a and the locking side 64a may be arranged on the connection end face 61 a side of the slip-out preventing projection groove 65a. In this case, the slip-out preventing projection 22a of the connection body 320 is preferably arranged on the upper side end at the front surface of the connection body 320.

The locking concave parts 341, 342 and 344 may not be arranged in the slide plate 27, and may be arranged on the inner surface of the side wall 28. In this case, the roller 44 is formed with a spherical body and biased towards the outer side in the width direction so as to be locked at the locking concave part arranged on the inner surface of the side wall 28. According to such configuration as well, the mobile telephone 301 can be positioned at a predetermined open/close angle, and a satisfactory clicking feeling can be obtained. The roller 44 may be non-rotatably formed with a slidable shape and raw material. In this case as well, the opening/closing operation is smoothly performed, and the open/close angle can be locked.

In the fully open state, a configuration of hiding the connection body 320 so as to be completely invisible is adopted, but a hole or a groove may be formed on the connection side of the lid side guide cover 380a and the body side guide cover 380b, so that the connection body 320 is partially visible even in the fully open state. In this case as well, a hinge will not project out and be seen as in the prior art, and a mobile telephone 301 of a smart design can be provided.

### Embodiment 5

Embodiment 5 will now be described.

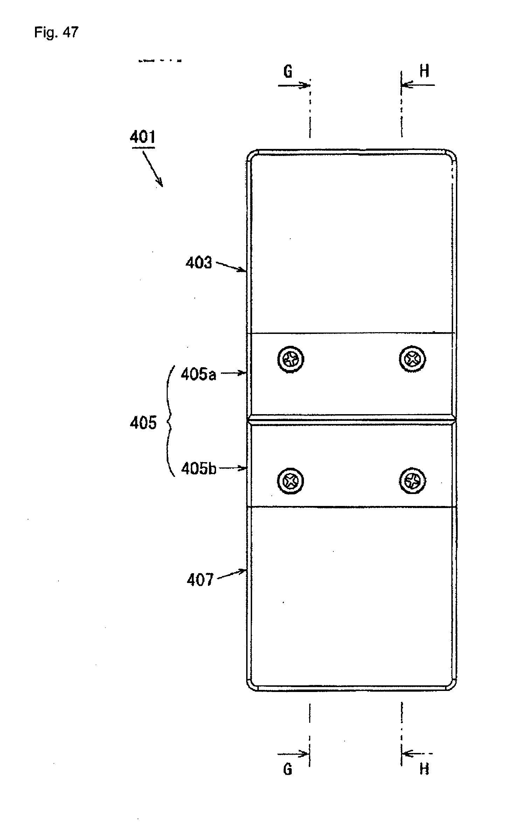

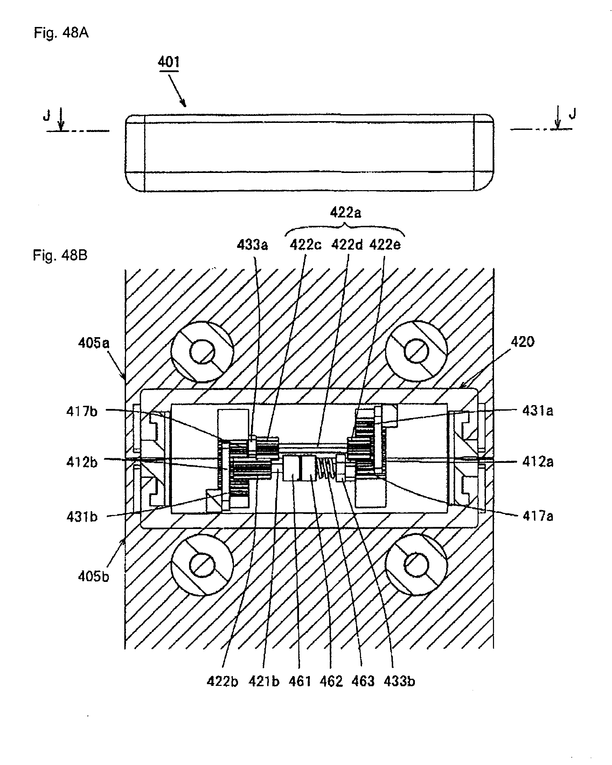

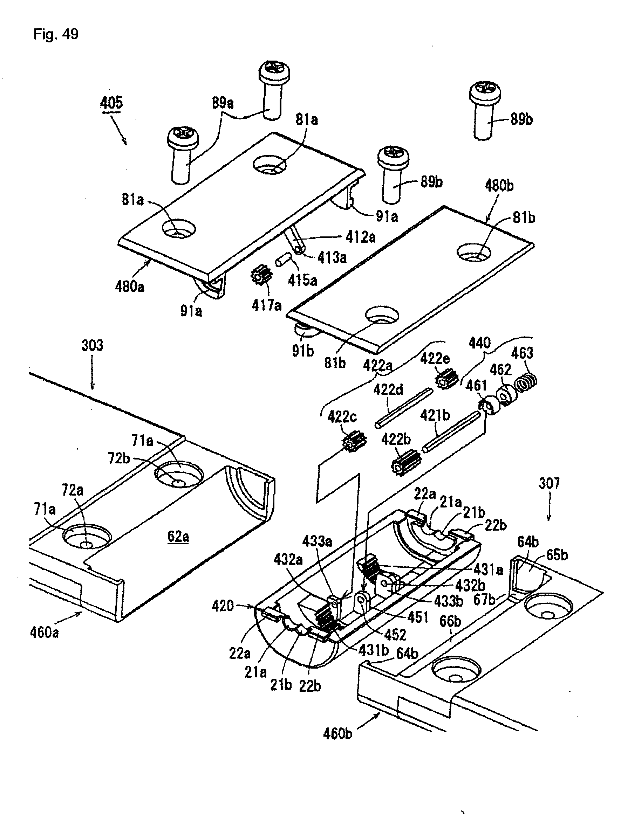

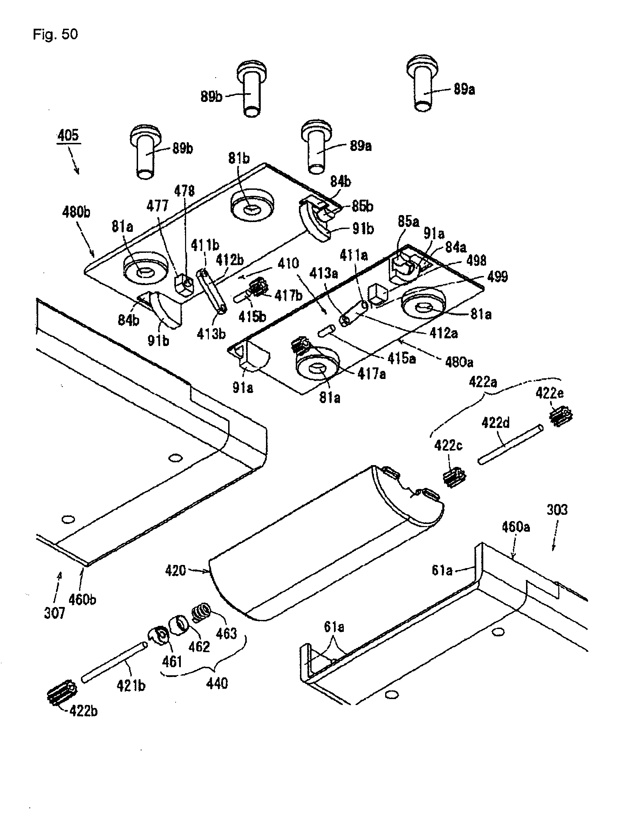

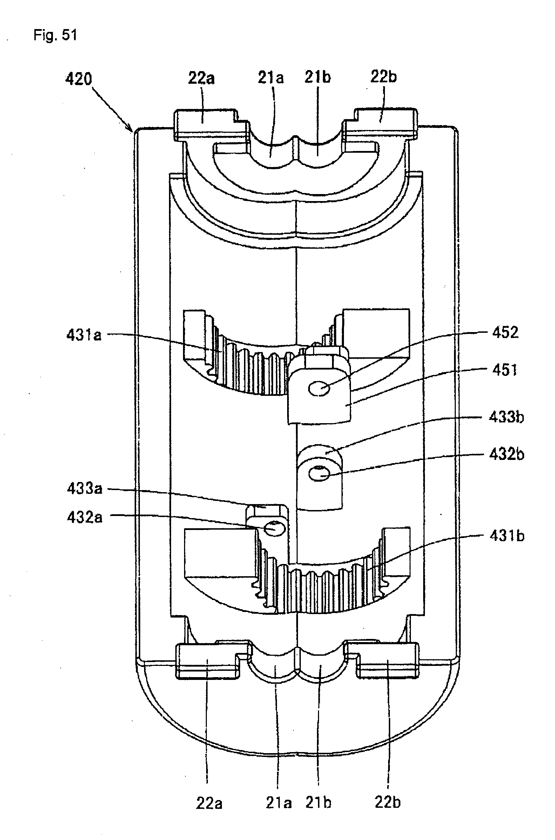

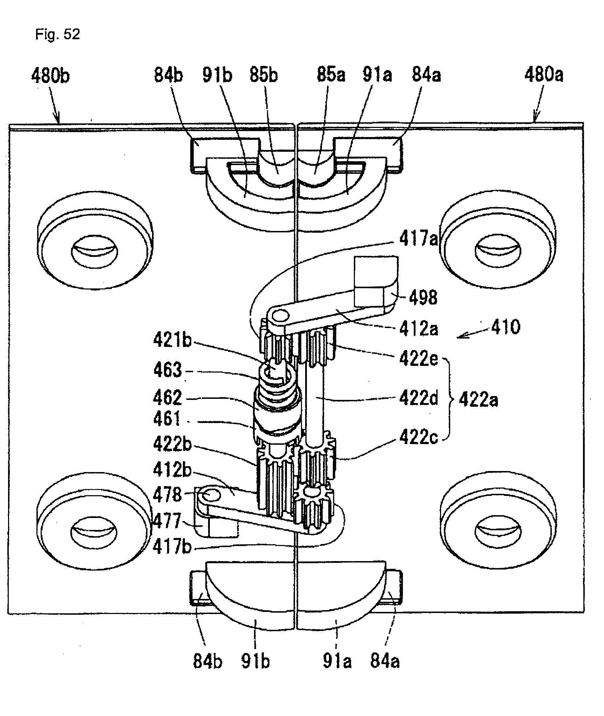

Fig. 47 is a plan view of a mobile telephone 401 of Embodiment 5, Fig. 48A is a front view of the mobile telephone 401, Fig. 48B is a plan enlarged cross sectional view of the inside of a connection unit 405, Fig. 49 is an exploded perspective view of a connection unit 405 seen from diagonally above, Fig. 50 is an exploded perspective view of the connection unit 405 seen from diagonally below, Fig. 51 is a perspective view of a connection body 420, and Fig. 52 is a perspective view of one part of the connection unit 405 in the open state seen from below.

The mobile telephone 401 includes a lid 403 similar to the lid 303 of the mobile telephone 301 of Embodiment 4 and a body 407 similar to the body 7 of the mobile telephone 301 of Embodiment 4. A lid side unit 405a corresponding to the lid side unit 305a (see Fig. 2) of Embodiment 4 is arranged in the lid 403, and a body side unit 405b corresponding to a body side unit 305b (see Fig. 2) of Embodiment 4 is arranged in the body 407.

A connection body 420 (see Fig. 50) and a link unit 410 are housed in a connection part of the lid side unit 405a and the body side unit 405b in the open state. The link unit 410, the connection body 420, the lid side unit 405a and the body side unit 405b configure a connection unit 405.

The lid side unit 405a is configured by a lid side guide cover 480a and a lid side guide body 460a, and the body side unit 405b is configured by a body side guide cover 480b and a body side guide body 460b.

The lid side guide cover 480a is the same as the lid side guide cover 380a of Embodiment 4, and a link pivot attachment part 498 similar to the link pivot attachment part 398 is arranged. The body side guide cover 480b is the same as the body side guide cover 380b of Embodiment 4 other than that a guide plate 477 similar to the guide plate 377 of Embodiment 4 and of different position is arranged.

A pivot attachment projection 499 projecting towards the inner side in the width direction of the mobile telephone 401 is arranged on the link pivot attachment part 498, and a pivot attachment projection 478 projecting towards the inner side in the width direction of the mobile telephone 401 is arranged on the guide plate 477.

The link unit 410 is configured by the lid side link unit of the lid side unit 405a side and a body side link unit of the body side unit 405b.
As shown in Fig. 52, the lid side link unit is configured by a lid side arm 412a having one end axially supported at the pivot attachment projection 499 of the link pivot attachment part 498, a rolling gear 417a axially supported in parallel to a pivot axis of the pivot attachment projection 499 at the other end of the lid side arm 412a, a center gear 422a gearing with the rolling gear 417a and having a parallel rotation axis, and a peripheral surface gear 431 a (see Fig. 51) having the teeth lined in a circular arc shape with the rotation axis of the center gear 422a as the center and being formed on the inner surface of the connection body 420.

The link pivot attachment part 498 is similar to the link pivot attachment part 398 of Embodiment 4, the lid side arm 412a is similar to the lid side arm 312a of Embodiment 4, and the rolling gear 417a is similar to the rolling gear 317a of Embodiment 4. The center gear 422a corresponds to the center gear 322a of Embodiment 4, and is configured by connecting the gears 422e, 422c having the same gear size with the shaft 422d. Therefore, the gears 422e, 422c are integrally rotated, and the center gear 422a acts as one gear.

The body side link unit is configured symmetric to the lid side link unit and is configured by a body side arm 412b having one end axially supported at the pivot attachment projection 478 of the guide plate 477, a rolling gear 417b axially supported in parallel to a pivot axis of the pivot attachment projection 478 at the other end of the body side arm 412b, a center gear 422b gearing with the rolling gear 417b and having a parallel rotation axis, and a peripheral surface gear 431 b (see Fig. 51) having the teeth lined in a circular arc shape with the rotation axis of the center gear 422b as the center and being formed on the inner surface of the connection body 420.
The guide plate 477 is similar to the guide plate 377 of Embodiment 4, the lid side arm 412b is similar to the lid side arm 312b of Embodiment 4, the rolling gear 417b is similar to the rolling gear 317b of Embodiment 4, and the center gear 422b is similar to the center gear 322b of Embodiment 4.

An angle fixing unit 440 is connected to the center gear 422b. The angle fixing unit 440 corresponds to the angle fixing unit 240 of Embodiment 3, and is configured by a locking guide body 461 including a coil spring 463 similar to the coil spring 215 of Embodiment 3, a locking convex body 462 similar to the locking convex body 221 of Embodiment 3, and a locking guide (not shown) similar to the locking guide 231, 236 of the locking guide body 234 of Embodiment 3. A shaft body 421 b is inserted to the coil spring 463, the locking convex body 462, and the locking guide body 461 in this order.

As shown in Fig. 51, the peripheral surface gear 431 a similar to the peripheral surface gear 331 a of Embodiment 3, and the peripheral surface gear 431 b similar to the peripheral surface gear 331 b of Embodiment 3 are arranged parallel in the left and right direction with different center axes and with a constant interval at the inner surface of the connection body 420. The spaced interval is wider than in Embodiment 3.

Bearings 433a, 433b similar to the bearings 333a, 333b of Embodiment 3 are arranged upright between the peripheral surface gear 431 a and the peripheral surface gear 431 b at the bottom on the inner side of the connection body 420. A bearing 451 including an axial hole 452 coaxial with the shaft center of a shaft hole 432b of the bearing 433b is formed upright in parallel to the bearing 433b. A shaft body 421 b is rotatably supported as shown in Fig. 49 between the bearing 451 and the bearing 433b, and the shaft body 421 b is attached to the angle fixing unit 440. The angle fixing unit 440 has the locking guide body 461 attached so as not to rotate at the bearing 433b, and the locking convex body 462 attached so as to integrally rotate with the shaft body 421 b. The shaft body 421 b is attached so as to integrally rotate with the center gear 422b, and thus the locking convex body 462 integrally rotates with the center gear 422b and the locking guide body 461 is always non-rotatable, whereby the angle fixing function described in Embodiment 3 is realized.

Other components are the same as Embodiment 3 and Embodiment 4, and the same reference numerals are denoted for the same components and the description thereof will be omitted.

An opening/closing operation of the connection unit 405 executed by advancing/retreating the connection body 420 with respect to the lid side unit 405a and the body side unit 405b, and an opening/closing operation of the mobile telephone 401 will be described below.

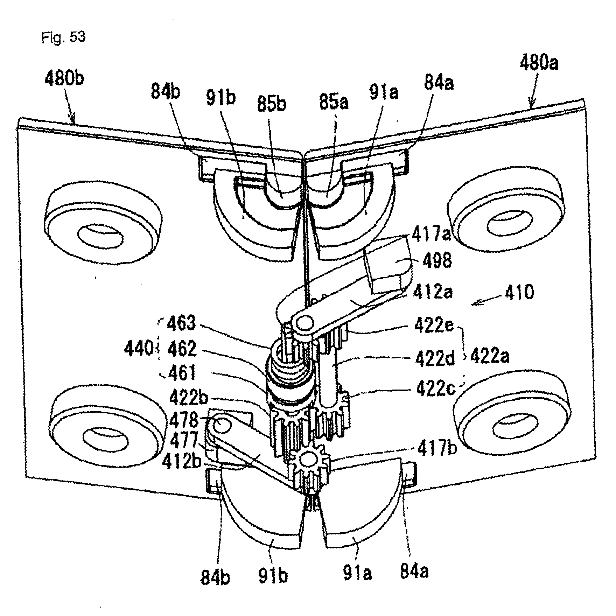

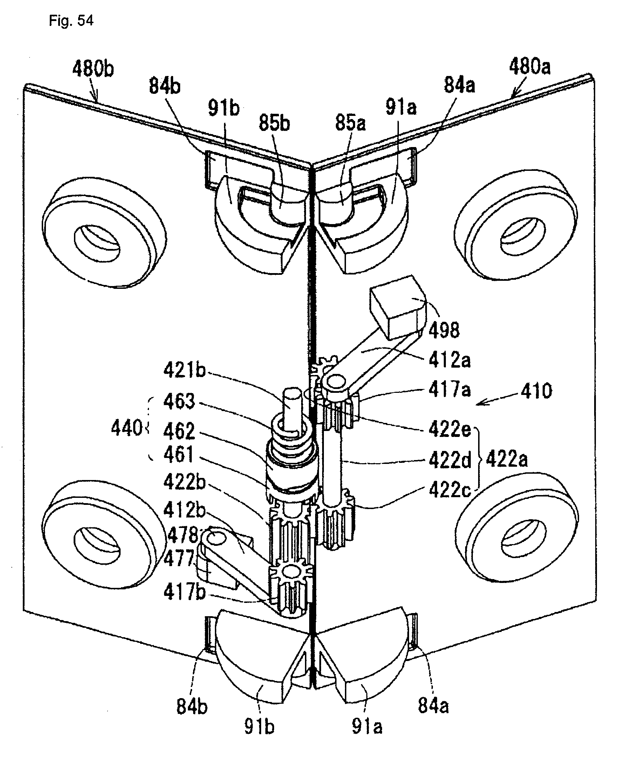

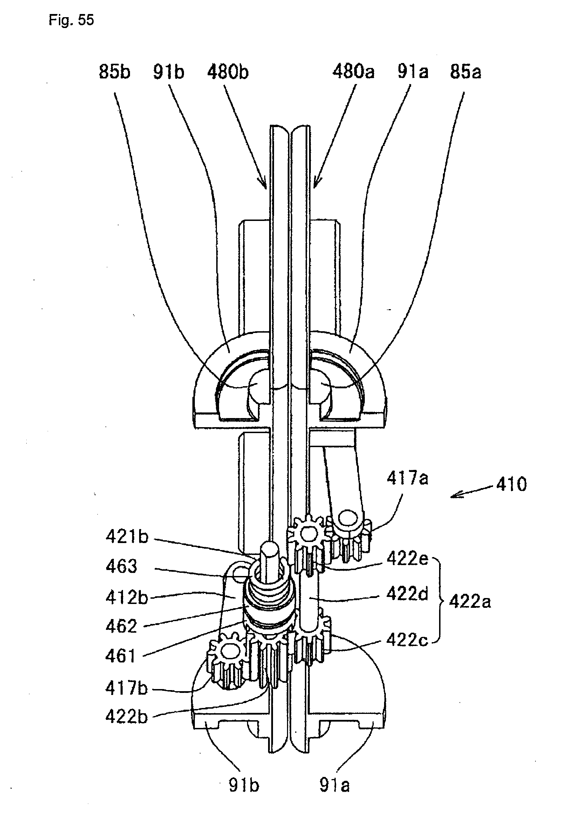

Fig. 52 is a perspective view of one part of the connection unit 405 in the open state, Fig. 53 is a perspective view of one part of the connection unit 405 slightly changed towards the closing direction from the open state, Fig. 54 is a perspective view of one part of the connection unit 405 further changed in the closing direction, and Fig. 55 is a perspective view of one part of the connection unit 405 in the closed state. Fig. 52 to Fig. 55 are views seen from the lower right position in Fig. 50.

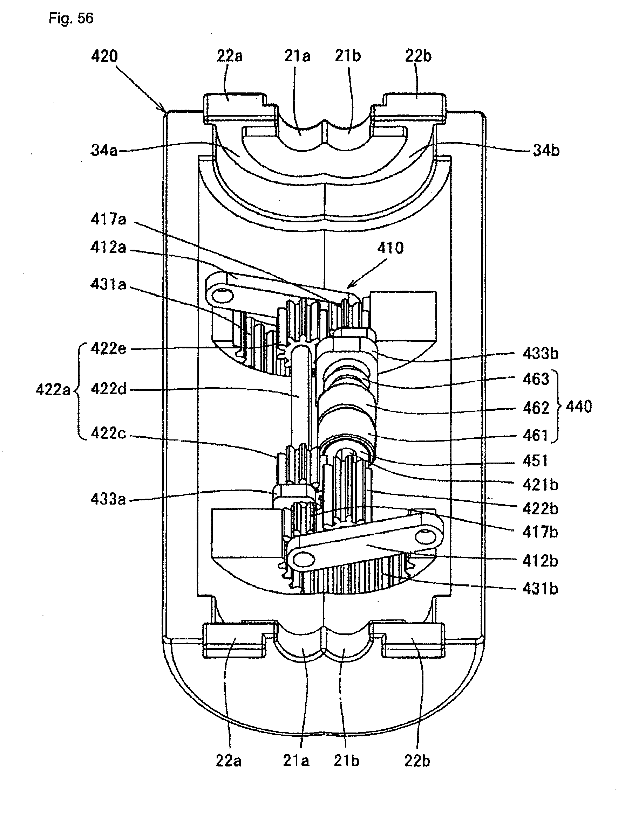

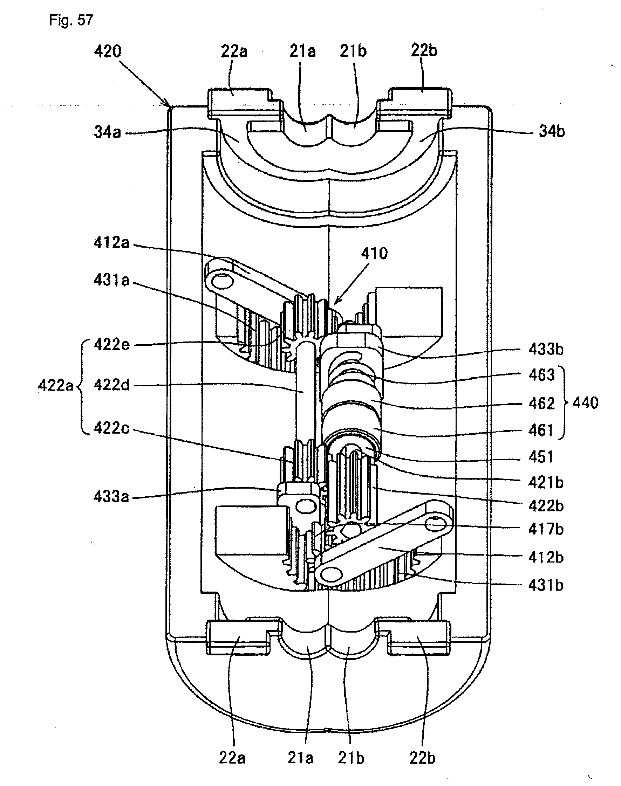

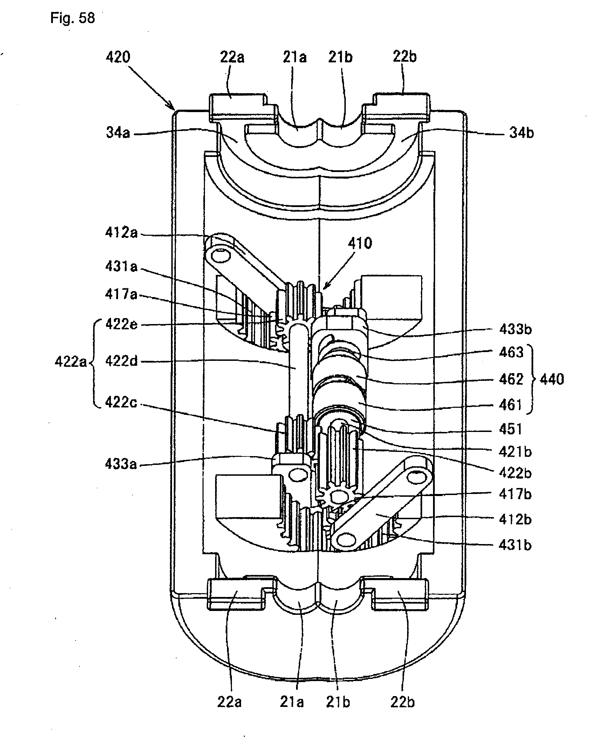

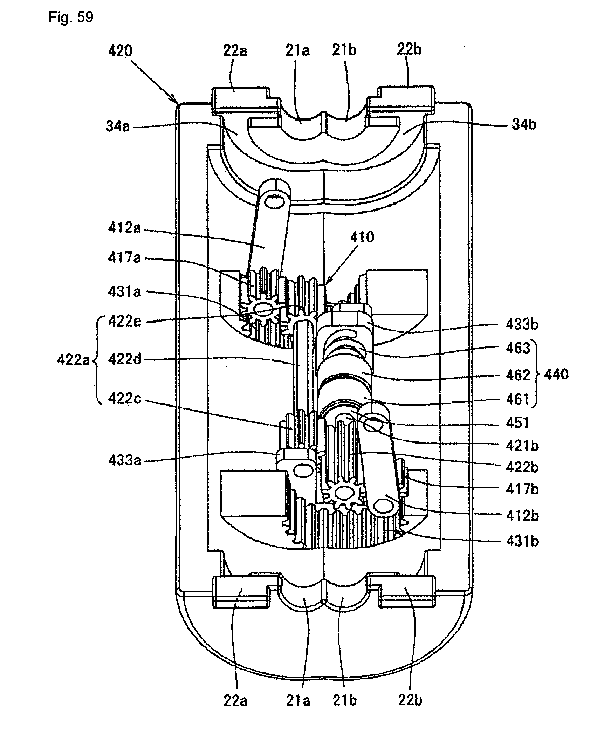

Fig. 56 is a perspective view of the link unit 410 and the angle fixing unit 440 in the open state, Fig. 57 is a perspective view of the link unit 410 and the angle fixing unit 440 slightly changed towards the closing direction from the open state, Fig. 58 is a perspective view of the link unit 410 and the angle fixing unit 440 further changed in the closing direction, and Fig. 59 is a perspective view of the link unit 410 and the angle fixing unit 440 in the closed state.

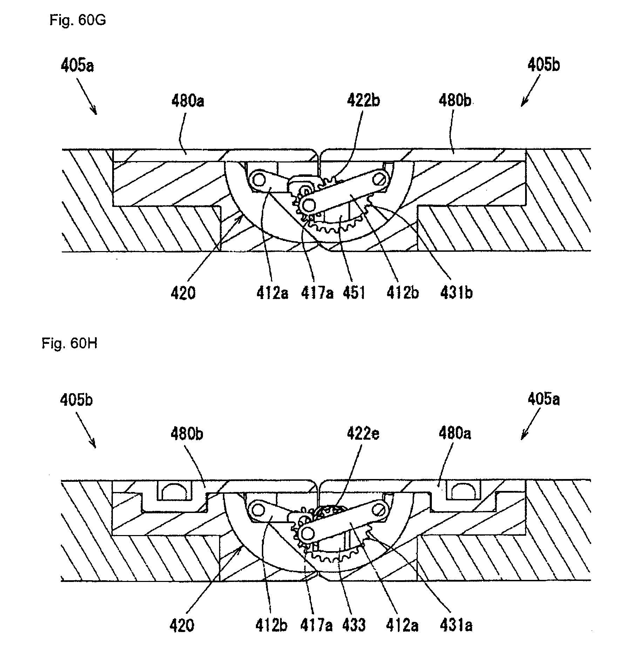

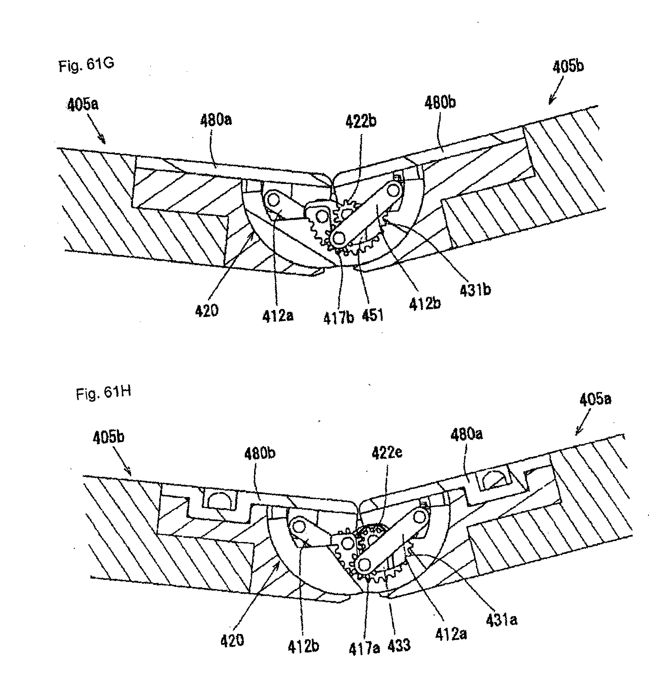

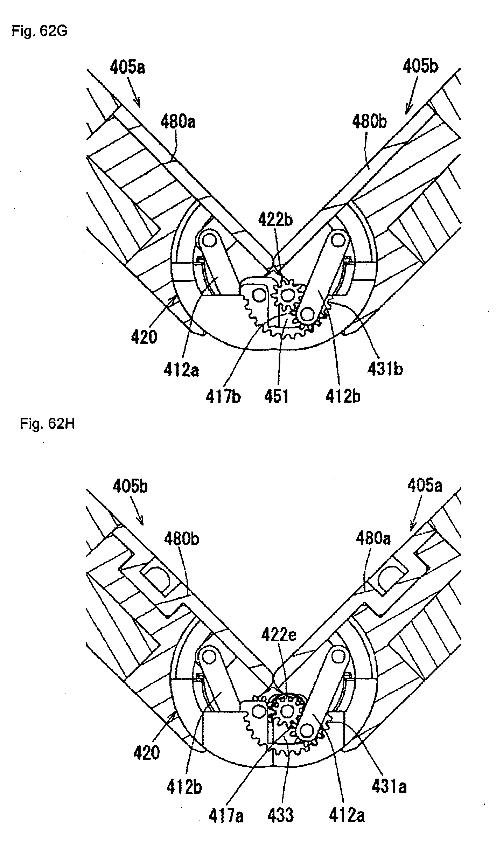

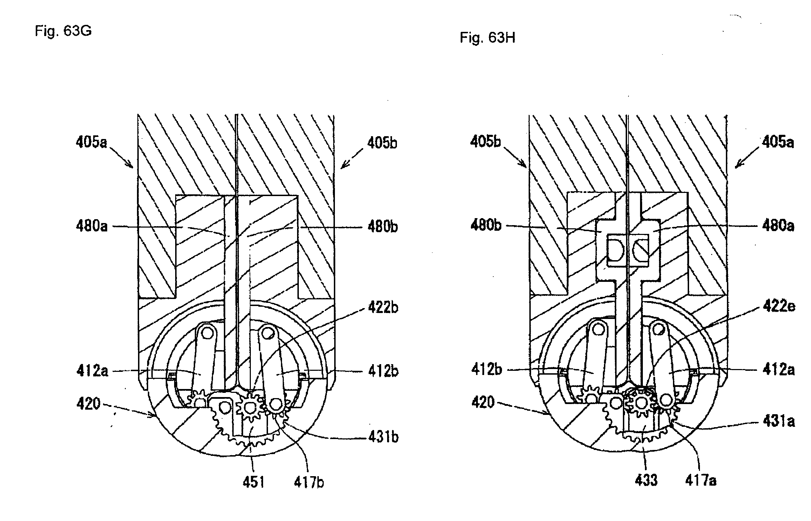

Fig. 60 is an explanatory view of the connection unit 405 portion in the open state in an enlarged cross section, Fig. 61 is an explanatory view of the connection unit 405 portion slightly changed towards the closing direction from the open state in an enlarged cross section, Fig. 62 is an explanatory view of the connection unit 405 portion further changed in the closing direction in an enlarged cross section, and Fig. 63 is an explanatory view of the connection unit 405 portion in the closed state in an enlarged cross section. In Fig. 60 to Fig. 63(G) ,shows a cross sectional view taken along a line G-G in Fig. 47, and (H) shows a cross sectional view taken along a line H-H in Fig. 47.
(G) and (H) are cross sections seen from opposite sides, and thus are shown in a left-right reversed state.

Regarding the opening/closing operation described in each figure, the opening/closing operation of the link unit 410 is the same as that of the link unit 310 of Embodiment 4, and the opening/closing operation of the angle fixing unit 340 is the same as that of the angle fixing unit 240 of Embodiment 3, and thus the detailed description thereof will be omitted.

According to the mobile telephone 401 of Embodiment 5, the effect same as the link unit 310 of Embodiment 4 and the effect same as the angle fixing unit 240 of Embodiment 3 are obtained.

### Embodiment 6

Embodiment 6 will now be described. Embodiment 6 is substantially the same as Embodiment 4, and the pushing unit 550 (550a, 550b) of a spherical body 552 (552a, 552b) is used in place of the pushing unit 40 of the roller 44 of Embodiment 4.

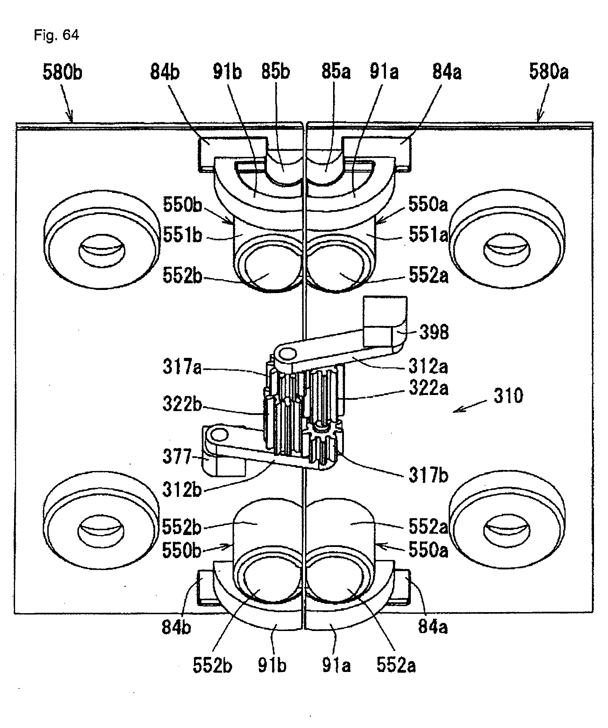

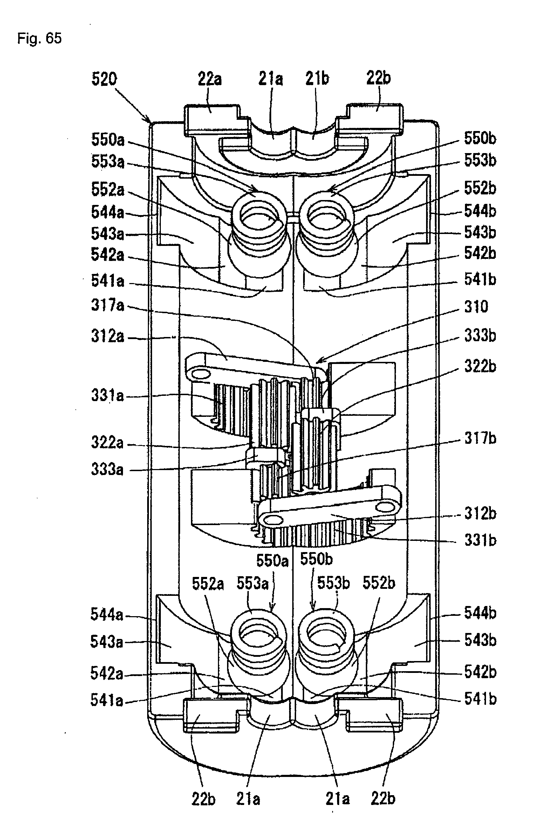

Fig. 64 is a perspective view of one part of the connection unit 305 (see Fig. 30 of Embodiment 4) in the open state seen from the lower side, and Fig. 65 is a perspective view of the link unit 310 and the pushing unit 550 in the open state.

As shown in Fig. 64, the lid side pushing unit 550a is configured by a tubular part 551 a formed projecting towards the lower side at the back surface of the lid side guide cover 580a corresponding to the lid side guide cover 380a of Embodiment 4, a coil spring 553a housed in the tubular part 551 a, and a spherical body 552a biased towards the opening part on the lower side at the tubular part 551 a by the coil spring.

The body side pushing unit 550b is configured by a tubular part 551 b formed projecting towards the lower side at the back surface of the body side guide cover 580b corresponding to the body side guide cover 380b of Embodiment 4, a coil spring 553b housed in the tubular part 551 b, and a spherical body 552b biased towards the opening part on the lower side at the tubular part 551 b by the coil spring 553b.

As shown in Fig. 65, on the inner side of the connection body 520, locking concave parts 541 a, 542a, a rolling rail 543a, and a locking concave part 544a are arranged in this order from the inner side to the outer side as a guide rail on which the spherical body 552a of the lid side pushing unit 550a rolls.

Symmetrically, locking concave parts 541 b, 542b, a rolling rail 543b, and a locking concave part 544b are arranged in this order from the inner side to the outer side as a guide rail on which the spherical body 552b of the body side pushing unit 550b rolls.

These correspond to the locking concave parts 341 a (341 b), 342a (342b), the rolling rails 343a (343b), and the locking concave parts 344a (344b) in Embodiment 4, and are the same as in Embodiment 4 other than being formed to a wide width.

Other components are the same as Embodiment 4, and the same reference numerals are denoted for the same components and the detailed description thereof will be omitted.

According to the above configuration, the link unit 310 performs the same opening/closing operation as in Embodiment 4, and obtains the same effects as in Embodiment 4.
The spherical body 552 of the pushing unit 550 rolls with the locking concave parts 541, 542, the rolling rail 543, and the locking concave part 544 as the guide rail, and thus effects same as the pushing unit 40 of Embodiment 4 are obtained.

The space on the inner side of the connection body 520 can be widely ensured by using the pushing unit 550 compared to when the pushing unit 40 of Embodiment 4 is used. Thus, the degree of freedom in housing the connection cable for electrically connecting the electronic equipment in the lid 303 and the electronic equipment in the body 307 is enhanced.

In the correspondence of the configuration of the invention and the above embodiments, a mobile terminal of the invention corresponds to the mobile telephone 1, 1 a of the embodiment; and similarly, a first casing corresponds to the lid 3, 303, 403; a connection mechanism corresponds to the connection unit 5, 205, 305, 405; a second casing corresponds to the body 7, 307, 407; a connection member corresponds to the connection body 20, 220, 320, 420, 520; an opening part corresponds to the concave part 62a, 62b; an advance/retreat ratio stabilization part corresponds to the link unit 100, 210, 310, 410; a second casing side connection corresponds to pivot attachment of the pivot attachment projection 102 and the guide plate 98; a second casing side arm corresponds to the body side arm 103, 243, 312b, 412b; a connection member side connection corresponds to engagement of the slide body 105 (251) and the guide 30 (230); a first casing side connection corresponds to a pivot attachment of the pivot attachment projection 106 and the link pivot attachment part 77; a first casing side arm corresponds to the lid side arm 107, 212, 312a, 412a; a pivot attachment part corresponds to the shaft member 109 and the shaft 227; a turning shaft of the first casing side corresponds to the turning shaft 133a; a turning shaft of the second casing side corresponds to the turning shaft 133b; an advance/retreat amount corresponds to the advance/retreat distance La, Lb; and a constant ratio corresponds to one to one; but the present invention is not limited only to the configuration of the above embodiments, and numerous other embodiments may be contrived.

### INDUSTRIAL APPLICABILITY

The present invention is not limited to the above-described mobile telephone, and is applicable to other mobile telephones and mobile terminals such as PDA.

## Claims

1. A connection mechanism which connects a first casing and a second casing so as to move between a closed state in which the casings are superimposed on each other and an open state in which the casings are open and spread out; the connection mechanism comprising:
opening parts formed on a connection side of the first casing and a connection side of the second casing;
connection members of which both ends can be advanced into and retreated from the opening parts of the first casing and the opening parts of the second casing; and
an advance/retreat ratio stabilization part for stabilizing a ratio of an advance/retreat amount of the connection member into/from the first casing to an advance/retreat amount of the connection member into/from the second casing to a predetermined value.

2. The connection mechanism according to claim 1, wherein
the advance/retreat ratio stabilization part is formed by a first casing side arm connected to the first casing, a second casing side arm connected to the second casing, and a pivot attachment part for pivotally attaching the first casing side arm and the second casing side arm and connecting to the connection member;
a first casing side connection for connecting the first casing side arm to the first casing, a second casing side connection for connecting the second casing side arm to the second casing, and a connection member side connection for connecting the pivot attachment part to the connection member are arranged; and
in the connection methods, one of the casing side connection or the connection member side connection is a pivot attachment allowing pivotal movement, and the other is a movable support in a constant direction.

3. The connection mechanism according to claim 2, wherein
the movable support is a slidable support allowing slide movement; and
the first casing side arm and the second casing side arm have surfaces on the side the first casing side arm and the second casing side arm face each other curved or bent formed to a concave form when the first casing and the second casing are in the closed state.

4. The connection mechanism according to claim 1, further comprising:
first casing side arms, one of which being pivotally attached to the first casing; and
second casing side arms, one of which being pivotally attached to the second casing; wherein
a plurality of supporting parts for supporting the other first casing side arm and the other second casing side arm to be movable while drawing a circular arc is arranged on the connection member.

5. The connection mechanism according to claim 4, wherein
the supporting part is formed with a peripheral surface gear in which teeth are arranged on an inner side of the circular arc;
a rolling gear which rolls on the peripheral surface gear is arranged on the other first casing side arm and the other second casing side arm;
a center gear allowing rotation about a center axis of each peripheral surface gear while gearing with the rolling gear is arranged in correspondence to each peripheral surface gear; and
the center gear gearing with the rolling gear of the first casing side arm and the center gear gearing with the rolling gear of the second casing side arm are connected to rotate in opposite directions to each other.

6. A connection mechanism which connects a first casing and a second casing so as to move between a closed state in which the casings are superimposed on each other and an open state in which the casings are open and spread out; the connection mechanism comprising:
opening parts formed on a connection side of the first casing and a connection side of the second casing; and
connection members of which both ends can be advanced into and retreated from the opening parts of the first casing and the opening parts of the second casing; wherein
the connection member is axially supported by the first casing at a turning shaft on the first casing side and is axially supported by the second casing at a turning shaft on the second casing side.

7. A mobile terminal comprising the connection mechanism according to any one of claims 1 to 6.
